# EUROPÄISCHE PATENTANMELDUNG

(11) **EP 2 672 140 A2**
(43) Veröffentlichungstag der Anmeldung: **11.12.2013**
(21) Anmeldenummer: 13166575.4
(22) Anmeldetag: 06.05.2013
(51) Int. Cl.: F16F 15/123, F16F 15/129

(54) **Torsionsschwingungsdämpferanordnung, insbesondere in einer Kupplungsscheibe**

(30) Priorität: 05.06.2012 DE 102012209471
(71) Anmelder: ZF Friedrichshafen AG, 88038 Friedrichshafen (DE)
(72) Erfinder: Handrik, Philipp, 02633 Göda (DE); Burkhardt, Martin, 99974 Mühlhausen (DE)

(57) **Zusammenfassung**

Eine Torsionsschwingungsdämpferanordnung, insbesondere in einer Kupplungsscheibe, umfasst einen in einem Bereich niedrigerer zu übertragender Drehmomente elastisch wirksamen ersten Dämpferbereich (16) mit einem ersten Eingangsbereich (24) und einem gegen die Wirkung einer ersten Dämpferelementenanordnung (38) um eine Drehachse (A) bezüglich des ersten Eingangsbereichs (24) drehbaren ersten Ausgangsbereich (28), einen im Bereich höherer zu übertragender Drehmomente elastisch wirksamen zweiten Dämpferbereich (18) mit einem zweiten Eingangsbereich (48) und einem gegen die Wirkung einer zweiten Dämpferelementenanordnung (58) um die Drehachse (A) bezüglich des zweiten Eingangsbereichs (48) drehbaren zweiten Ausgangsbereich (54), wobei der erste Dämpferbereich (16) eine erste Dämpferstufe (20) und eine zweite Dämpferstufe umfasst, wobei die erste Dämpferstufe (20) bis zu niedrigeren Drehmomenten elastisch wirksam ist, als die zweite Dämpferstufe, ferner umfassend eine Reibformation (120) zur Erzeugung einer Reibkraft wenigstens immer dann, wenn ein Eingangsbereich der ersten Dämpferstufe (20) sich bezüglich eines Ausgangsbereichs (30) der ersten Dämpferstufe (20) um die Drehachse (A) dreht und wenn ein Eingangsbereich der zweiten Dämpferstufe sich bezüglich eines Ausgangsbereichs der zweiten Dämpferstufe um die Drehachse (A) dreht.

## Beschreibung

Die vorliegende Erfindung betrifft eine Torsionsschwingungsdämpferanordnung, insbesondere in einer Kupplungsscheibe, umfassend einen in einem Bereich niedrigerer zu übertragender Drehmomente elastisch wirksamen ersten Dämpferbereich mit einem ersten Eingangsbereich und einem gegen die Wirkung einer ersten Dämpferelementenanordnung um eine Drehachse bezüglich des ersten Eingangsbereichs drehbaren ersten Ausgangsbereich, einen im Bereich höherer zu übertragender Drehmomente elastisch wirksamen zweiten Dämpferbereich mit einem zweiten Eingangsbereich und einem gegen die Wirkung einer zweiten Dämpferelementenanordnung um die Drehachse bezüglich des zweiten Eingangsbereichs drehbaren zweiten Ausgangsbereich.

Derartige Torsionsschwingungsdämpferanordnungen werden beispielsweise in Kupplungsscheiben eingesetzt, die in Kraftfahrzeugreibungskupplungen zur Drehmomentübertragung zwischen einem Antriebsaggregat, beispielsweise einer Brennkraftmaschine, und einem Getriebe, beispielsweise Handschaltgetriebe oder automatisiertes Schaltgetriebe, eingesetzt werden. Mit ihren beiden Dämpferbereichen, die grundsätzlich im Drehmomentenfluss seriell zueinander angeordnet sind, kann eine derartige Torsionsschwingungsdämpferanordnung auf verschiedene Bereiche der zu übertragenden Drehmomente abgestimmt werden. Der erste Dämpferbereich wird im Allgemeinen als Vordämpfer oder Niederlastdämpfer bezeichnet und ist dann elastisch wirksam, wenn die zu übertragenden Drehmomente beispielsweise im Leerlaufzustand oder bei geringer Lastanforderung vergleichsweise gering sind. Der zweite Dämpferbereich wird im Allgemeinen als Hauptdämpfer oder Lastdämpfer bezeichnet und ist dann elastisch wirksam, wenn durch entsprechende Lastanforderung ein Fahrzeug beispielsweise beschleunigt oder bei höherer Geschwindigkeit bewegt werden soll. Dabei ist es durchaus möglich, dass diese beiden Drehmomentenbereiche, in welchen die Dämpferbereiche jeweils wirksam sind, einander überlappen, so dass ein stufenloser bzw. sanfter Übergang vom Wirkungsbereich des ersten Dämpferbereichs zum Wirkungsbereich des zweiten Dämpferbereichs erreicht werden kann.

Um insbesondere den ersten Dämpferbereich differenzierter auf verschiedene Lastanforderungszustände abstimmen zu können, kann dieser mehrstufig ausgebildet sein, also beispielsweise mit einer ersten Dämpferstufe und einer zweiten Dämpferstufe, wobei die erste Dämpferstufe bis zu niedrigeren Drehmomenten elastisch wirksam ist, als die zweite Dämpferstufe. Dies bedeutet, dass die erste Dämpferstufe beispielsweise dann in ihrem elastischen Bereich wirksam ist, wenn eine Reibungskupplung zwar eingerückt ist, im Getriebe aber kein Gang eingelegt ist, oder wenn die Kupplung ausgerückt ist, also im Wesentlichen keine Last über die Torsionsschwingungsdämpferanordnung übertragen wird. Die zweite Dämpferstufe kann so abgestimmt sein, dass ihr Bereich elastischer Wirksamkeit dann genutzt werden kann, wenn ein Fahrzeug beispielsweise in einem Schleichfahrtmodus betrieben wird, in welchem die Lastanforderung an sich gering ist und ein Fahrzeug beispielsweise bei vergleichsweise geringer Geschwindigkeit mit näherungsweise konstanter Geschwindigkeit rollt.

Es sei in diesem Zusammenhang darauf hingewiesen, dass im Sinne der vorliegenden Erfindung ein Bereich, in welchem eine Dämpferstufe oder ein Dämpferbereich elastisch wirksam ist, derjenige Bereich ist, in welchem das zu übertragende Drehmoment ausreichend hoch ist, um den jeweiligen Eingangsbereich bezüglich des zugeordneten Ausgangsbereichs gegen die Rückstellwirkung einer jeweiligen Dämpferelementenanordnung, also beispielsweise einer Mehrzahl von als Schraubendruckfedern ausgebildeten Dämpferfedern, zu verdrehen, jedoch nicht so hoch ist, dass eine die Relativdrehung des Eingangsbereichs bezüglich des Ausgangsbereichs begrenzende Drehwinkelbegrenzung wirksam wird. Ein derartiger Bereich elastischer Wirksamkeit kann insbesondere bei vorgespannt eingebauten Dämpferelementenanordnungen nach unten hin begrenzt sein, so dass ein bestimmtes Mindestdrehmoment erforderlich ist, um die unter Vorspannung eingebaute Dämpferelementenanordnung weiter zu verformen, also in den Bereich der elastischen Wirksamkeit eintreten zu können.

Es ist die Aufgabe der vorliegenden Erfindung, eine Torsionsschwingungsdämpferanordnung, insbesondere in einer Kupplungsscheibe, vorzusehen, mit welcher eine verbesserte Schwingungsdämpfungscharakteristik erzielt werden kann.

Erfindungsgemäß wird diese Aufgabe gelöst durch eine Torsionsschwingungsdämpferanordnung, insbesondere in einer Kupplungsscheibe, umfassend einen in einem Bereich niedrigerer zu übertragender Drehmomente elastisch wirksamen ersten Dämpferbereich mit einem ersten Eingangsbereich und einem gegen die Wirkung einer ersten Dämpferelementenanordnung um eine Drehachse bezüglich des ersten Eingangsbereichs drehbaren ersten Ausgangsbereich, einen im Bereich höherer zu übertragender Drehmomente elastisch wirksamen zweiten Dämpferbereich mit einem zweiten Eingangsbereich und einem gegen die Wirkung einer zweiten Dämpferelementenanordnung um die Drehachse bezüglich des zweiten Eingangsbereichs drehbaren zweiten Ausgangsbereich, wobei der erste Dämpferbereich eine erste Dämpferstufe und eine zweite Dämpferstufe umfasst, wobei die erste Dämpferstufe bis zu niedrigeren Drehmomenten elastisch wirksam ist, als die zweite Dämpferstufe, wobei die erste Dämpferstufe einen Eingangsbereich und einen gegen die Wirkung einer ersten Dämpferelementeneinheit der ersten Dämpferelementenanordnung um die Drehachse bezüglich ihres Eingangsbereichs drehbaren Ausgangsbereich umfasst, wobei die zweite Dämpferstufe einen Eingangsbereich und einen gegen die Wirkung einer zweiten Dämpferelementeneinheit der ersten Dämpferelementenanordnung um die Drehachse bezüglich ihres Eingangsbereichs drehbaren Ausgangsbereich umfasst, ferner umfassend eine Reibformation zur Erzeugung einer Reibkraft wenigstens immer dann, wenn der Eingangsbereich der ersten Dämpferstufe sich bezüglich des Ausgangsbereichs der ersten Dämpferstufe um die Drehachse dreht und wenn der Eingangsbereich der zweiten Dämpferstufe sich bezüglich des Ausgangsbereichs der zweiten Dämpferstufe um die Drehachse dreht.

Da bei der erfindungsgemäßen Torsionsschwingungsdämpferanordnung dafür gesorgt ist, dass insbesondere im gesamten Wirkungsbereich des ersten Dämpferbereichs, also bei kleineren zu übertragenden Drehmomenten, immer dann, wenn eine Relativdrehung in zumindest einer der Dämpferstufen auftritt, dies begleitet ist mit der Erzeugung einer Reibkraft, besteht kein Totgang bzw. Relativdrehwinkelbereich, in welchem keine zur Energiedissipation führende Reibkraft verfügbar ist. Dies bedeutet, dass auch kleinste Relativauslenkungen zwischen einem jeweiligen Eingangsbereich und Ausgangsbereich zur Energieabfuhr durch in der Reibformation entstehende Reibarbeit führen.

Um eine Drehmomentübertragungsverbindung zwischen den beiden Dämpferbereichen erlangen zu können, kann vorgesehen sein, dass der Eingangsbereich der zweiten Dämpferstufe mit dem zweiten Ausgangsbereich vorzugsweise im Wesentlichen ohne Drehbewegungsspiel gekoppelt ist.

Um eine baulich einfache Verknüpfung zwischen den beiden Dämpferbereichen erlangen zu können, wird vorgeschlagen, dass der zweite Ausgangsbereich mit dem Eingangsbereich der ersten Dämpferstufe vorzugsweise im Wesentlichen ohne Drehbewegungsspiel gekoppelt ist. Dabei kann das Vermeiden jedweden Totgangs dadurch erlangt werden, dass ein Scheibenelement den zweiten Ausgangsbereich und den Eingangsbereich der ersten Dämpferstufe bereitstellt.

Um eine hinsichtlich der zu übertragenden Drehmomente gestufte Wirksamkeit der beiden Dämpferbereiche bzw. auch der beiden Dämpferstufen erlangen zu können, wird vorgeschlagen, dass der Ausgangsbereich der zweiten Dämpferstufe bezüglich des Ausgangsbereichs der ersten Dämpferstufe in einem ersten Freiwinkelbereich um die Drehachse drehbar ist, dass der zweite Ausgangsbereich bezüglich des Ausgangsbereichs der ersten Dämpferstufe in einem zweiten Freiwinkelbereich drehbar ist und dass der zweite Freiwinkelbereich größer ist, als der erste Freiwinkelbereich.

Bei einer baulich sehr einfach zu realisierenden, gleichwohl jedoch zuverlässig wirkenden Ausgestaltung des ersten Dämpferbereichs wird vorgeschlagen, dass der Eingangsbereich der ersten Dämpferstufe Umfangsabstützbereiche für Dämpferelemente der ersten Dämpferelementeneinheit bereitstellt und dass der Ausgangsbereich der ersten Dämpferstufe Umfangsabstützbereiche für die Dämpferelemente der ersten Dämpferelementeneinheit bereitstellt, wobei die Umfangsabstützbereiche des Eingangsbereichs der ersten Dämpferstufe und die Umfangsabstützbereiche des Ausgangsbereichs der ersten Dämpferstufe zueinander radial gestaffelt liegen.

Da die erste Dämpferstufe im Allgemeinen dann elastisch wirksam ist, wenn nur sehr kleine Drehmomente zu übertragen sind bzw. an der ersten Dämpferelementeneinheit anliegen, führt die radiale Staffelung der Umfangsabstützbeeiche des Eingangsbereichs und des Ausgangsbereichs der ersten Dämpferstufe nicht zu einer übermäßig starken ungleichen Belastung der Dämpferelemente derselben. Insbesondere kann bei derartiger Ausgestaltung vorgesehen sein, dass die Dämpferelemente der ersten Dämpferelementeneinheit in ihrem radial äußeren Bereich an den Umfangsabstützbereichen des Eingangsbereichs der ersten Dämpferstufe abgestützt oder abstützbar sind und in ihrem radial inneren Bereich an den Umfangsabstützbereichen des Ausgangsbereichs der ersten Dämpferstufe abgestützt oder abstützbar sind.

Bei der bei etwas größeren Drehmomenten elastisch wirksamen zweiten Dämpferstufe des ersten Dämpferbereichs kann zum Vermeiden einer ungleichmäßigen Belastung von Dämpferelementen derselben vorgesehen sein, dass der Eingangsbereich der zweiten Dämpferstufe Umfangsabstützbereiche für Dämpferelemente der zweiten Dämpferelementeneinheit bereitstellt und dass der Ausgangsbereich der zweiten Dämpferstufe Umfangsabstützbereiche für die Dämpferelemente der zweiten Dämpferelementeneinheit bereitstellt, wobei die Umfangsabstützbereiche des Eingangsbereichs der zweiten Dämpferstufe und die Umfangsabstützbereiche des Ausgangsbereichs der zweiten Dämpferstufe zueinander axial gestaffelt liegen. Insbesondere ist es dabei vorteilhaft, wenn die Dämpferelemente der zweiten Dämpferelementeneinheit in ihrem axial mittleren Bereich an den Umfangsabstützbereichen des Eingangsbereichs oder des Ausgangsbereichs der zweiten Dämpferstufe, vorzugsweise des Ausgangsbereichs der zweiten Dämpferstufe, abgestützt oder abstützbar sind und axial beidseits des axial mittleren Bereichs an den Umfangsabstützbereichen des Ausgangsbereichs oder des Eingangsbereichs der zweiten Dämpferstufe, vorzugsweise des Eingangsbereichs der zweiten Dämpferstufe, abgestützt oder abstützbar sind.

Um im ersten Dämpferbereich den Wirkwinkel, in welchem dieser bei vergleichsweise kleinen zu übertragenden Drehmomenten elastisch wirksam sein kann, möglichst groß gestalten zu können, wird vorgeschlagen, dass die zweite Dämpferelementeneinheit wenigstens eine Gruppe von Dämpferelementen mit wenigstens zwei in Umfangsrichtung aufeinander folgenden und bezüglich einander an einem bezüglich des Eingangsbereichs der zweiten Dämpferstufe und des Ausgangsbereichs der zweiten Dämpferstufe um die Drehachse bewegbaren Zwischenabstützelement abgestützten Dämpferelementen umfasst. Ein derartiges Zwischenabstützelement überträgt das Drehmoment zwischen zueinander seriell liegenden Dämpferelementen einer jeweiligen Dämpferstufe und vergrößert somit den Wirkwinkel einer diese Dämpferelemente aufweisenden Dämpferelementeneinheit.

Dabei kann bei einer aus Symmetriegründen und zum Vermeiden von Unwuchten besonders vorteilhaften Ausgestaltungsform wenigstens ein Zwischenabstützelement ringartig ausgebildet sein.

Aus Symmetriegründen kann insbesondere zum Vermeiden von Unwuchten weiter vorgesehen sein, dass die zweite Dämpferelementeneinheit wenigstens zwei Gruppen von Dämpferelementen mit wenigstens zwei in Umfangsrichtung aufeinander folgenden Dämpferelementen umfasst, wobei wenigstens ein Zwischenabstützelement Zwischenabstützbereiche für wenigstens zwei Gruppen von Dämpferelementen bereitstellt.

Zum Erhalt einer baulich kompakten Ausgestaltung wird vorgeschlagen, dass die erste Dämpferstufe radial innerhalb der zweiten Dämpferstufe angeordnet ist oder/und dass die erste Dämpferstufe und die zweite Dämpferstufe zueinander axial versetzt angeordnet sind. Des Weiteren kann die erste Dämpferstufe radial innerhalb des zweiten Ausgangsbereichs angeordnet sein. Alternativ oder zusätzlich kann die zweite Dämpferstufe an einer axialen Seite des zweiten Ausgangsbereichs angeordnet sein.

Bei einer insbesondere zur Übertragung größerer Drehmomente auch geeigneten und stabil realisierbaren Ausgestaltung des zweiten Dämpferbereichs kann vorgesehen sein, dass der zweite Eingangsbereich zwei in axialem Abstand zueinander angeordnete und miteinander fest verbundene Deckscheibenelemente umfasst und dass der zweite Ausgangsbereich ein axial zwischen die Deckscheibenelemente eingreifendes Zentralscheibenelement umfasst. Auch für die zweite Dämpferstufe des ersten Dämpferbereichs kann ein ähnlicher Aufbau dadurch bereitgestellt werden, dass der Eingangsbereich der zweiten Dämpferstufe zwei axial nebeneinander liegende, miteinander wenigstens drehfest verbundene und Umfangsabstützbereiche für Dämpferelemente der zweiten Dämpferelementeneinheit bereitstellende Käfigelemente umfasst und dass der Ausgangsbereich der zweiten Dämpferstufe ein axial zwischen die Käfigelemente eingreifendes und Umfangsabstützbereiche für die Dämpferelemente der zweiten Dämpferelementeneinheit bereitstellendes Scheibenelement umfasst. Durch diese die Umfangsabstützbereiche des Eingangsbereichs der zweiten Dämpferstufe bereitstellenden Käfigelemente kann nicht nur die Umfangsabstützung, sondern auch in beiden axialen Bereichen eine axiale Abstützung bzw. Halterung der Dämpferelemente der zweiten Dämpferelementeneinheit gewährleistet werden.

Der Ausgangsbereich der ersten Dämpferstufe kann eine Nabe umfassen, welche beispielsweise zur drehfesten Ankopplung an eine Welle mit einer Innenverzahnung ausgebildet sein kann.

Die erste Dämpferstufe und die zweite Dämpferstufe des ersten Dämpferbereichs können so ausgelegt sein, dass sie in nach oben durch im Wesentlichen das gleiche Maximaldrehmoment begrenzten Bereichen der zu übertragenden Drehmomente elastisch wirksam sind. Dies bedeutet, dass einerseits ein Bereich der zu übertragenden Drehmomente existiert, in welchem nur die erste Dämpferstufe elastisch wirksam ist, die zweite Dämpferstufe beispielsweise auf Grund eines Umfangsbewegungsspiels jedoch noch nicht elastisch wirksam ist, während ein höherer Drehmomentenbereich existiert, in welchem die erste Dämpferstufe und die zweite Dämpferstufe parallel wirksam sind, und zwar bis zu einem Maximaldrehmoment, ab welchem diese beiden Dämpferstufen dann nicht mehr elastisch wirksam sind.

Um bei der erfindungsgemäßen Torsionsschwingungsdämpferanordnung zuverlässig in jedem Relativdrehbewegungszustand für eine Reibwirkung sorgen zu können, wird vorgeschlagen, dass die Reibformation einen zwischen dem zweiten Eingangsbereich und dem Ausgangsbereich der ersten Dämpferstufe wirksamen ersten Reibbereich mit wenigstens einer bezüglich des zweiten Eingangsbereichs drehfesten Reibfläche und wenigstens einer bezüglich des Ausgangsbereichs der ersten Dämpferstufe drehfesten Reibfläche umfasst. Da völlig unabhängig davon, welche Dämpferstufe bzw. welcher Dämpferbereich elastisch wirksam ist, grundsätzlich immer eine Relativdrehbewegung zwischen dem zweiten Eingangsbereich und dem Ausgangsbereich der ersten Dämpferstufe auftreten wird, ist dafür gesorgt, dass immer dann, wenn zu übertragende Drehmomente oder Drehungleichförmigkeiten eine Relativdrehbewegung erzwingen, auch Reibarbeit geleistet werden muss, insbesondere auch im Wirkungsbereich der ersten Dämpferstufe.

Die Reibformation kann ferner einen zwischen dem zweiten Eingangsbereich und dem Eingangsbereich der zweiten Dämpferstufe wirksamen zweiten Reibbereich mit wenigstens einer bezüglich des zweiten Eingangsbereichs drehfesten Reibfläche und wenigstens einer bezüglich des Eingangsbereichs der zweiten Dämpferstufe drehfesten Reibfläche umfassen. Dieser zweite Reibbereich wird insbesondere dann wirksam sein, wenn die zweite Dämpferstufe des ersten Dämpferbereichs elastisch wirksam ist, also eine Relativdrehung zwischen deren Eingangsbereich und Ausgangsbereich auftritt, oder wenn der zweite Dämpferbereich wirksam ist.

Ein weiterer Aspekt zur Erzeugung der gewünschten Reibwirkung kann dadurch realisiert sein, dass die Reibformation einen zwischen dem Eingangsbereich der zweiten Dämpferstufe und dem Ausgangsbereich der zweiten Dämpferstufe wirksamen dritten Reibbereich mit wenigstens einer bezüglich des Eingangsbereichs der zweiten Dämpferstufe drehfesten Reibfläche und wenigstens einer bezüglich des Ausgangsbereichs der zweiten Dämpferstufe drehfesten Reibfläche umfasst.

Ein weiterer Aspekt der Erzeugung einer Reibwirkung unter Miteinbeziehung wenigstens eines in der zweiten Dämpferstufe vorgesehenen Zwischenabstützelements kann vorsehen, dass die Reibformation einen zwischen dem Eingangsbereich oder/und dem Ausgangsbereich der zweiten Dämpferstufe und wenigstens einem Zwischenabstützelement wirksamen vierten Reibbereich mit wenigstens einer bezüglich des Eingangsbereichs oder/und des Ausgangsbereichs der zweiten Dämpferstufe drehfesten Reibfläche und wenigstens einer bezüglich wenigstens eines Zwischenabstützelements drehfesten Reibfläche umfasst.

Die vorliegende Erfindung betrifft ferner eine Kupplungsscheibe, beispielsweise für eine Reibungskupplung in einem Kraftfahrzeug, umfassend eine erfindungsgemäß aufgebaute Torsionsschwingungsdämpferanordnung.

Bei einer derartigen Kupplungsscheibe können Kupplungsreibbeläge am zweiten Eingangsbereich vorgesehen sein, während der Ausgangsbereich der ersten Dämpferstufe eine Kupplungsnabe umfassen kann, um auf diese Art und Weise eine drehfeste Ankopplung an eine weiterführende Welle, beispielsweise eine Getriebeeingangswelle erlangen zu können.

Die Erfindung wird nachfolgend mit Bezug auf die beiliegenden Figuren detailliert beschrieben. Es zeigt:
- Fig. 1: eine Längsschnittdarstellung einer Torsionsschwingungsdämpferanordnung, geschnitten längs einer Linie I-I in Fig. 3;
- Fig. 2: eine der Fig. 1 entsprechende Längsschnittdarstellung, geschnitten längs einer Linie II-II in Fig. 3;
- Fig. 3: eine teilweise aufgeschnitten dargestellte Axialansicht der in der in den Fig. 1 und 2 dargestellten Torsionsschwingungsdämpferanordnung;
- Fig. 4: eine Explosionsdarstellung von wesentlichen Komponenten eines ersten Dämpferbereichs der Torsionsschwingungsdämpferanordnung der Fig. 1 und 2;
- Fig. 5: eine teilweise geschnitten dargestellte Axialansicht der zusammengefügten Komponenten der Fig. 4;
- Fig. 6: in perspektivischer Ansicht eine Abtriebsnabe der in den Fig. 1 und 2 dargestellten Torsionsschwingungsdämpferanordnung;
- Fig. 7: in perspektivischer Darstellung ein Scheibenenelement eines ersten Dämpferbereichs der Torsionsschwingungsdämpferanordnung der Fig. 1 und 2;
- Fig. 8: in perspektivischer Darstellung ein ringartiges Zwischenabstützelement des ersten Dämpferbereichs der Torsionsschwingungsdämpferanordnung der Fig. 1 und 2;
- Fig. 9: in perspektivischer Darstellung ein Käfigelement des ersten Dämpferbereichs der Torsionsschwingungsdämpferanordnung der Fig. 1 und 2;
- Fig. 10: in ihren Darstellungen a) bis d) verschiedene Kennlinienverläufe des ersten Dämpferbereichs der Torsionsschwingungsdämpferanordnung der Fig. 1 und 2;
- Fig. 11: in ihren Darstellungen a) bis d) in Zuordnungen zu den Darstellungen a) bis d) der Fig. 10 jeweils eine schaltbildartige Darstellung einer zum jeweiligen Kennlinienverlauf führenden Torsionsschwingungsdämpferanordnung.

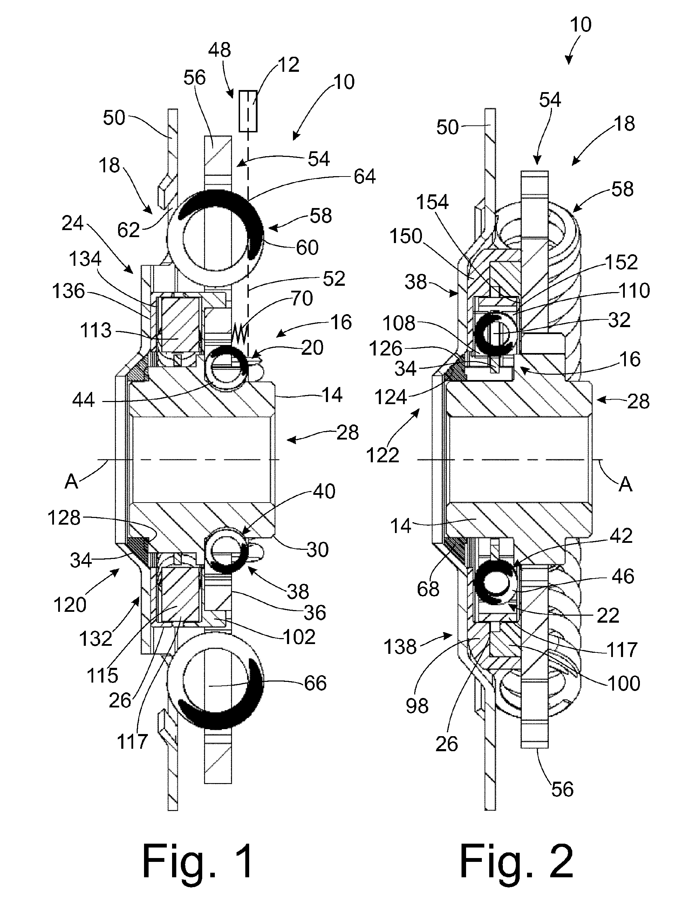

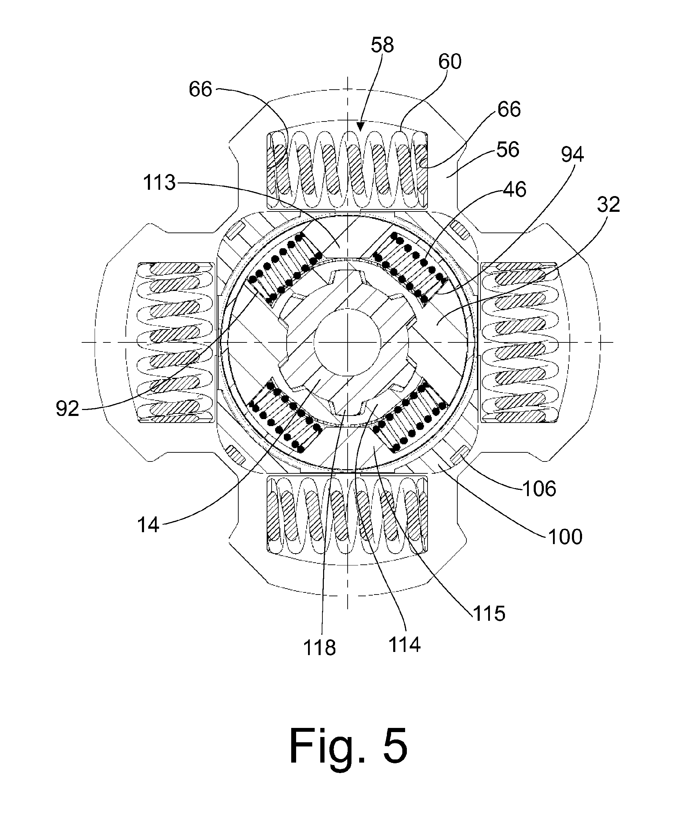

Die Fig. 1 bis 9 zeigen in verschiedener Darstellung eine allgemein mit 10 bezeichnete Torsionsschwingungsdämpferanordnung, die beispielsweise in eine Kupplungsscheibe einer Reibungskupplung integriert sein kann. Die Torsionsschwingungsdämpferanordnung 10 umfasst im Drehmomentübertragungsweg zwischen den nur schematisch dargestellten Reibbelägen 12 und einer Kupplungsnabe 14 einen als Niederlastdämpfer wirksamen ersten Dämpferbereich 16 und einen als Hauptlastdämpfer wirksamen zweiten Dämpferbereich 18. Im Zugzustand, also bei Übertragung eines Drehmoments von einem Antriebsaggregat in Richtung zu einem Getriebe, liegt der zweite Dämpferbereich 18 im Drehmomentenfluss vor dem ersten Dämpferbereich 16.

Der erste Dämpferbereich 16 umfasst zwei Dämpferstufen 20, 22. Dabei ist die erste Dämpferstufe 20 dieser beiden Dämpferstufen des ersten Dämpferbereichs 16 so ausgelegt, dass sie dann alleine elastisch wirksam ist, wenn im Wesentlichen keine oder nur sehr geringe Drehmomente zu übertragen sind. Die zweite Dämpferstufe 22 des ersten Dämpferbereichs 16 ist so ausgelegt, dass sie dann zusätzlich zur ersten Dämpferstufe 20 elastisch wirksam ist, wenn ein Fahrzeug sich in Schleichfahrt befindet, also beispielsweise mit konstanter, geringer Geschwindigkeit gefahren wird, was ebenfalls nur die Übertragung eines vergleichsweise geringen Drehmoments erfordert. In diesen Zuständen, in welchen der erste Dämpferbereich 16 elastisch, also schwingungsdämpfend bzw. schwingungsaufnehmend wirksam ist, ist der zweite Dämpferbereich 18 im Wesentlichen nicht elastisch wirksam, also als starre Baugruppe zu betrachten. Sind über die Torsionsschwingungsdämpferanordnung 10 größere Drehmomente zu übertragen, so ist der zweite Dämpferbereich 18 elastisch bzw. schwingungsdämpfend wirksam, während der erste Dämpferbereich 16 dann im Wesentlichen als starre Baugruppe zu betrachten ist.

Der erste Dämpferbereich 16 weist einen allgemein mit 24 bezeichneten ersten Eingangsbereich auf. Dieser erste Eingangsbereich 24 des ersten Dämpferbereichs 16 stellt im Wesentlichen auch einen Eingangsbereich 26 der zweiten Dämpferstufe 22 des ersten Dämpferbereichs 16 bereit. Die bereits angesprochene Kupplungsnabe 14 stellt einen ersten Ausgangsbereich 28 des ersten Dämpferbereichs 16 und gleichzeitig auch einen Ausgangsbereich 30 der ersten Dämpferstufe 20 des ersten Dämpferbereichs 16 bereit.

Ein Scheibenenelement 32 stellt einen Ausgangsbereich 34 der zweiten Dämpferstufe 22 bereit und ist in seinem radial inneren Bereich in nachfolgend noch beschriebener Art und Weise mit dem Ausgangsbereich 30 der ersten Dämpferstufe 20 unter Erzeugung eines Freiwinkels, also mit Umfangsbewegungsspiel, gekoppelt.

Der erste Dämpferbereich 16 umfasst ferner eine allgemein mit 38 bezeichnete Dämpferelementenanordnung. Diese umfasst in Zuordnung zur ersten Dämpferstufe 20 eine erste Dämpferelementeneinheit 40 und in Zuordnung zur zweiten Dämpferstufe 22 eine zweite Dämpferelementeneinheit 42. Die erste Dämpferelementeneinheit 40 wiederum umfasst eine Mehrzahl von in Umfangsrichtung aufeinander folgend angeordneten, beispielsweise als Schraubendruckfedern ausgebildeten Dämpferelementen 44. Die zweite Dämpferelementeneinheit 42 umfasst beispielsweise ebenfalls als Schraubendruckfedern ausgebildete, in Umfangsrichtung aufeinander folgende Dämpferelemente 46. Es sei hier darauf hingewiesen, dass diese Dämpferelemente 44 bzw. 46 auch mehrere ineinander geschachtelte Federn mit unterschiedlicher Länge oder/und unterschiedlicher Steifigkeit umfassen können. Weiterhin können alternativ oder zusätzlich als Dämpferelemente auch andere Elastomerelemente, wie z.B. Gummiblöcke oder dergleichen, eingesetzt werden. Grundsätzlich können derartige Dämpferelemente auch ein kompressibles oder über eine Drossel verdrängbares Fluid umfassen.

Der zweite Dämpferbereich 18 umfasst einen zweiten Eingangsbereich 48, der im dargestellten Beispiel zwei in Richtung einer Drehachse A in Abstand zueinander liegende und beispielsweise durch Vernietung oder dergleichen fest miteinander verbundene Deckscheibenelemente 50, 52 umfasst. In den Figuren ist lediglich das Deckscheibenelement 50 konstruktiv ausgeführt dargestellt. Das Deckscheibenelement 52 ist in Fig. 1 durch Strichlinie angedeutet. Die Reibbeläge 12 einer die Torsionsschwingungsdämpferanordnung 10 aufweisenden Kupplungsscheibe können beispielsweise am Deckscheibenelement 52 getragen sein.

Weiterhin umfasst der zweite Dämpferbereich 18 einen zweiten Ausgangsbereich 54. Im dargestellten Ausgestaltungsbeispiel umfasst dieser ein Zentralscheibenelement 56, das axial zwischen den beiden Deckscheibenelementen 50, 52 angeordnet ist. Wie nachfolgend noch erläutert, ist mit diesem zweitem Ausgangsbereich 54 bzw. dem Zentralscheibenelement 56 der Eingangsbereich 26 der zweiten Dämpferstufe 22 drehfest gekoppelt.

Eine zweite Dämpferelementenanordnung 58 des zweiten Dämpferbereichs 18 umfasst mehrere, im dargestellten Beispiel vier, in Umfangsrichtung aufeinander folgende Dämpferelemente 60, die beispielsweise ebenfalls als Schraubendruckfedern ausgebildet sein können und mehrere ineinander geschachtelte bzw. auch in Umfangsrichtung aufeinander folgende Federn umfassen können. Auch bei der zweiten Dämpferelementenanordnung 58 können die Dämpferelemente 60 so wie vorangehend mit Bezug auf die erste Dämpferelementenanordnung 38 angegeben ausgeführt sein.

Zur Drehmomentübertragung zwischen dem zweiten Eingangsbereich 48 und dem zweiten Ausgangsbereich 54 stützen sich die Dämpferelemente 60 der zweiten Dämpferelementenanordnung 58 an jeweiligen an den Deckscheibenelementen 50, 52 des zweiten Eingangsbereichs 48 gebildeten Umfangsabstützbereichen 62, 64 einerseits und an in Zuordnung zu diesen am zweiten Ausgangsbereich 54 bzw. dem Zentralscheibenelement 56 gebildeten Umfangsabstützbereichen 66 ab. Diese Umfangsabstützbereiche 62, 64, 66 sind beispielsweise an Umfangsendbereichen jeweiliger Federfenster in den Deckscheibenelementen 50, 52 bzw. im Zentralscheibenelement 56 bereitgestellt.

Der zweite Eingangsbereich 48, insbesondere das Deckscheibenelement 50 desselben, ist in seinem radial inneren Bereich konisch ausgeformt und über einen entsprechend konisch geformten Lagerring 68 bezüglich der Kupplungsnabe 14 drehbar gelagert. Durch ein sich bezüglich der Kupplungsnabe 14 einerseits und des Deckscheibenelements 52 andererseits abstützendes, in Fig. 1 nur symbolartig dargestelltes Vorspannelement 70, beispielsweise Tellerfeder oder Wellfeder oder dergleichen, ist der erste Eingangsbereich 48 axial bezüglich der Kupplungsnabe 14 vorgespannt, so dass das Deckscheibenelement 50 in seinem radial innen liegenden, konisch ausgeformten Bereich in definierter Anlage an dem Lagerring 68 gehalten ist.

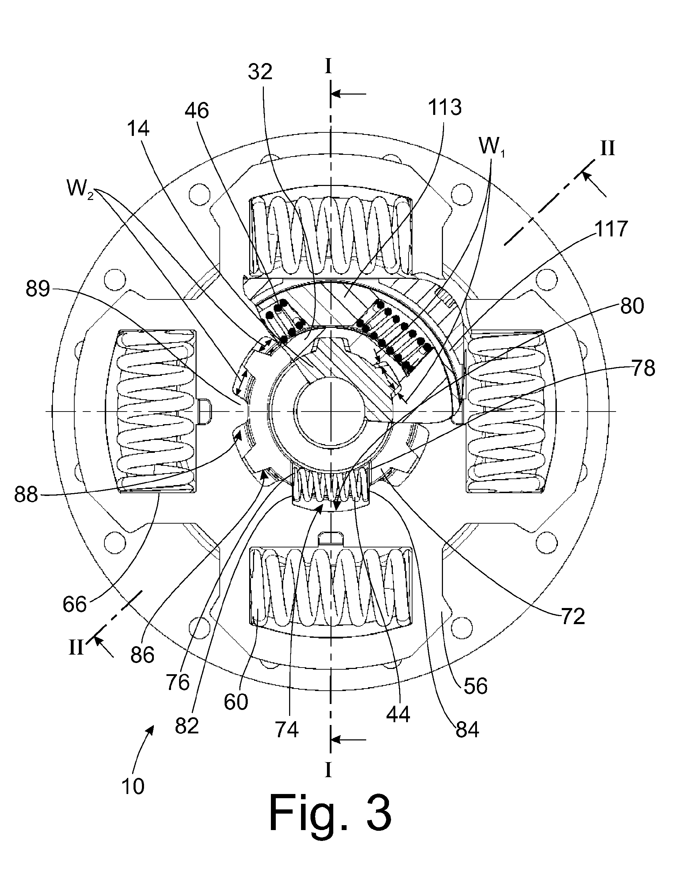

Nachfolgend wird insbesondere mit Bezug auf die Fig. 3 bis 9 der konstruktive Aufbau des ersten Dämpferbereichs 16 detailliert erläutert.

Die im Wesentlichen den Ausgangsbereich 30 der ersten Dämpferstufe 20 bzw. auch den ersten Ausgangsbereich 28 bereitstellende Kupplungsnabe 14 weist einen ringartig nach radial außen ragenden Radialvorsprung 72 auf, der an zwei einander diametral gegenüberliegenden Umfangspositionen Aussparungen 74 jeweils zur Aufnahme eines Dämpferelements 44 der ersten Dämpferelementeneinheit 40 aufweisen.

Die Aussparungen 74 sind in Umfangsrichtung durch jeweilige Umfangsabstützbereiche 76, 78 begrenzt, an welchen die Dämpferelemente 44 sich abstützen können bzw. auch unter Vorspannung anliegen können.

Das auch den Eingangsbereich 36 der ersten Dämpferstufe 20 bereitstellende Zentralscheibenelement 56 weist in seinem radial inneren Bereich in Entsprechung zu den Aussparungen 74 Aussparungen 80 auf, in welche die Dämpferelemente 44 mit ihrem nach radial außen über den Radialvorsprung 72 hinaus ragenden, also radial äußeren Bereich eingreifen. Die nach radial innen offenen Aussparungen 80 sind in Umfangsrichtung durch jeweilige Umfangsabstützbereiche 82, 84 begrenzt, deren Umfangsabstand beispielsweise dem Umfangsabstand der Umfangsabstützbereiche 76, 78 an der Kupplungsnabe 14 entsprechen kann. Auch an den Umfangsabstützbereichen 82, 84 können die Dämpferelemente 44 sich in Umfangsrichtung abstützen, so dass deren radial innerer Bereich an den Umfangabstützbereichen 76, 78 der Kupplungsnabe 14 und mithin des Ausgangsbereichs 30 der ersten Dämpferstufe 20 abgestützt ist, während ihr radial äußerer Bereich an den Umfangsabstützbereichen 82, 84 des Eingangsbereichs 36 der ersten Dämpferstufe 20 abgestützt bzw. abstützbar ist. Auf diese Art und Weise können gegen die Rückstellwirkung der Dämpferelemente 44 die Kupplungsnabe 14 und das Zentralscheibenenelement 56 sich um die in Fig. 1 auch erkennbare Drehachse A bezüglich einander drehen.

Um diese Relativdrehbewegung zu begrenzen, ist am Radialvorsprung 72 der Kupplungsnabe 14 eine Verzahnung 86 mit nach radial außen greifenden Zähnen 87 vorgesehen. Am Innenumfang des Zentralscheibenelements 56 ist eine Verzahnung 88 mit Zähnen 89 vorgesehen. Die Verzahnungen 86 und 88 stehen unter Beibelassung eines Umfangsbewegungsspiels in Eingriff miteinander, so dass, vorgegeben durch dieses Umfangsbewegungsspiel der Eingangsbereich 36 und der Ausgangsbereich 30 der ersten Dämpferstufe 20 nur begrenzt im Bereich eines zweiten Freiwinkels W₂ bezüglich einander drehbar sind. Dabei kann die Anordnung derart sein, dass ausgehend von einer Grund-Relativdrehlage in beiden Relativdrehrichtungen das gleiche Bewegungsausmaß möglich ist, grundsätzlich kann aber auch eine Differenzierung für den Schubzustand und den Zugzustand vorgesehen sein.

Das Scheibenelement 32 stellt den Ausgangsbereich 34 der zweiten Dämpferstufe 22 bereit. Hierfür sind nach radial außen offene Aussparungen 90 vorgesehen. Diese nehmen die Dämpferelemente 46 der zweiten Dämpferstufe 22 auf. In ihren Umfangsendbereichen sind die Aussparungen 90 begrenzt durch jeweilige Umfangsabstützbereiche 92, 94, an welchen die Dämpferelemente 46 sich abstützen können bzw. unter Vorspannung abgestützt sein können.

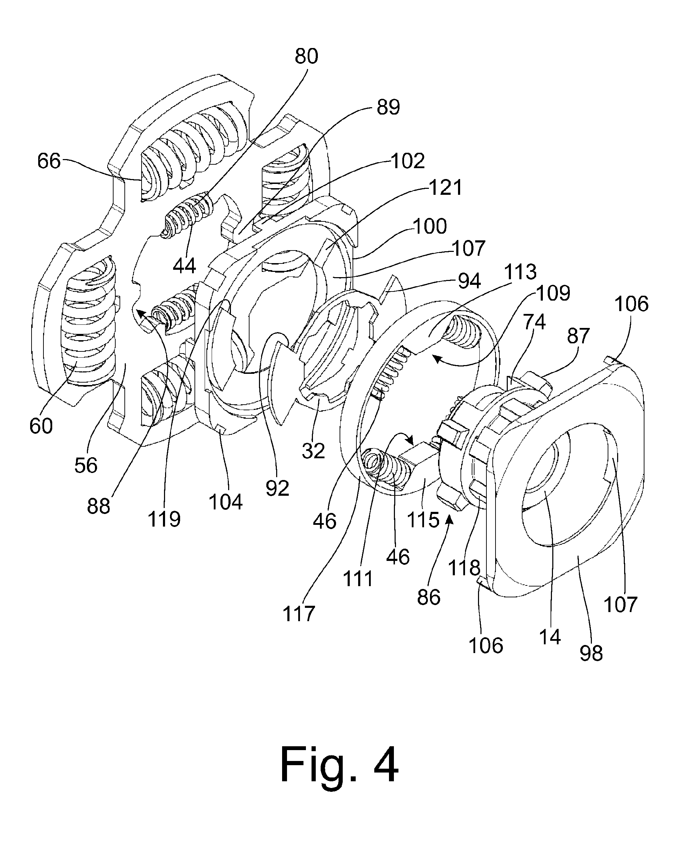

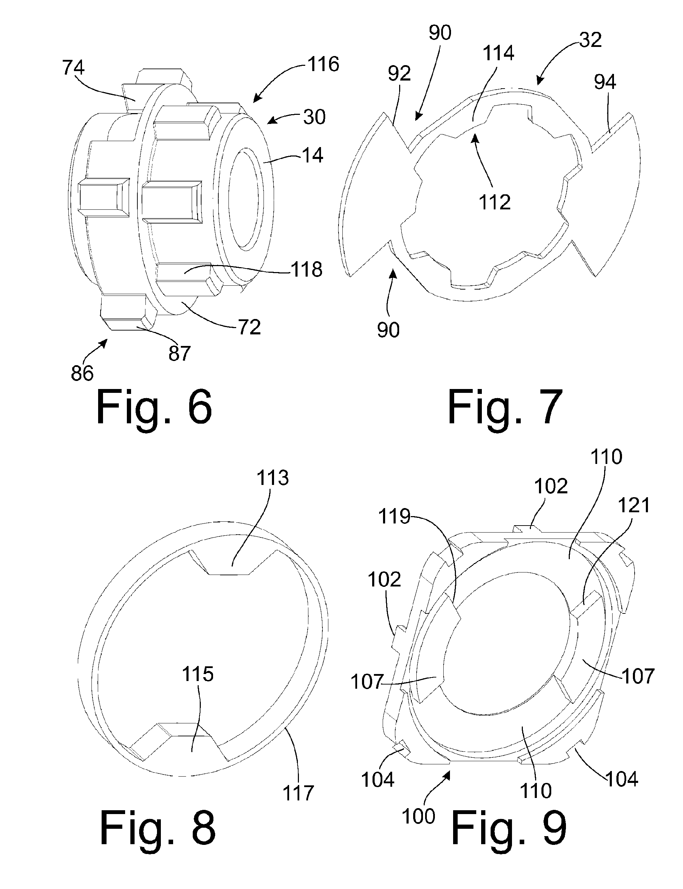

Der Eingangsbereich 26 der zweiten Dämpferstufe 22 ist bereitgestellt durch zwei axial nebeneinander liegende bzw. bereichsweise auch aneinander anliegende Käfigelemente 98, 100. Das in den Fig. 1 und 2 auch erkennbare unmittelbar neben dem Zentralscheibenelement 56 liegende Käfigelement 100 weist Axialvorsprünge 102 auf, die in zugeordnete Aussparungen des Zentralscheibenelements 56 im Wesentlichen bewegungsspielfrei eingreifen und somit eine drehfeste Ankopplung des Käfigelements 100 an den zweiten Ausgangsbereich realisieren. Wie beispielsweise in den Fig. 4 und 9 erkennbar, kann das näherungsweise quadratisch, ringartig ausgebildete Käfigelement 100 an seinen vier Längsseiten jeweils mittig einen derartigen Axialvorsprung 102 aufweisen. In den dazu um etwa 45° versetzten Eckbereichen weist das Käfigelement 100 Aussparungen 104 auf, in welche jeweils ein Axialvorsprung 106 des anderen Käfigelements 98 im Wesentlichen drehbewegungsspielfrei eingreift. Auf diese Art und Weise sind die beiden ansonsten zueinander im Wesentlichen komplementär bzw. zu ihrer Trennebene spiegelsymmetrisch aufgebauten Käfigelemente 98, 100 miteinander drehfest gekoppelt.

Wie bei dem in Fig. 4 und Fig. 9 dargestellten Käfigelement 100 veranschaulicht, weisen die beiden Käfigelemente 98, 100 in Zuordnung zu den Dämpferelementen 46 der zweiten Dämpferelementeneinheit 42 zwischen Axialvorsprüngen 107 jeweilige Aussparungen 108, 110 auf, in welchen die Dämpferelemente 46 aufgenommen sind. Die Aussparungen 108 und 110 sind in Umfangsrichtung durch jeweilige Umfangsabstützbereiche 119 bzw. 121 an den Axialvorsprüngen 107 begrenzt, an welchen die Dämpferelemente 46 sich axial beidseits der Umfangsabstützbereiche 92, 94 am Scheibenelement 32 abstützen oder abstützen können.

Während bei der ersten Dämpferstufe 20 die Umfangsabstützbereiche 82, 84 des Eingangsbereichs 36 und 76, 78 des Ausgangsbereichs 30 zueinander radial gestaffelt liegen, liegen bei der zweiten Dämpferstufe 22 die Umfangsabstützbereiche 119, 121 des Eingangsbereichs 26 und 92, 94 des Ausgangsbereichs 34 zueinander axial versetzt, wobei auf Grund der Ausgestaltung in der zweiten Dämpferstufe 22 die Dämpferelemente 46 sowohl vom Eingangsbereich 26, auch vom Ausgangsbereich 34 symmetrisch angesteuert werden, während bei der ersten Dämpferstufe 20 durch die radiale Staffelung eine unsymmetrische Ansteuerung erfolgt. Da die Dämpferelemente 44 der ersten Dämpferstufe 20 eine vergleichsweise geringere Steifigkeit aufweisen, als die Dämpferelemente 46 der zweiten Dämpferstufe 22 und mithin nur bei vergleichsweise geringeren Drehmomenten auf Kompression belastet werden, ist die unsymmetrische Ansteuerung in der ersten Dämpferstufe 20 unproblematisch. In der zweiten Dämpferstufe 22, welche auf Grund der vergleichsweise höheren Steifigkeit der Dämpferelemente 46 derselben auch bei etwas höheren Drehmomenten elastisch wirksam ist, wird eine Ausweich- oder Verkippbewegung der Dämpferelemente 46 durch die symmetrische Ansteuerung vermieden.

Die Dämpferfedereinheit 42 der zweiten Dämpferstufe 22 ist mit zwei Gruppen 109, 111 mit jeweils zwei in Umfangsrichtung aufeinander folgend angeordneten und in der jeweiligen Gruppe 109, 111 seriell wirksamen Dämpferelementen 46 ausgebildet. Jede dieser Gruppen 109, 111 stützt sich in ihren Umfangsendbereichen bezüglich der Käfigelemente 98, 100 einerseits und des Scheibenelements 32 andererseits an den Umfangsabstützbereichen 119, 121 bzw. 92, 94 ab. Die beiden Dämpferelemente 46, also beispielsweise Schraubendruckfedern, einer jeweiligen Gruppe 109 bzw. 111 stützen sich bezüglich einander an nach radial innen greifenden Abstützvorsprüngen 113, 115 eines ringartig ausgebildeten Zwischenabstützelements 117 ab. Dieses ringartige Zwischenabstützelement 117 weist also bei den beiden Gruppen 109, 111 eine kraftübertragende Funktion zwischen den jeweils seriell zueinander wirkenden Dämpferelementen 46 auf und ist bezüglich des Eingangsbereichs 26, also der beiden Käfigelemente 98, 100, und bezüglich des Ausgangsbereichs 34, also des Scheibenelements 32, grundsätzlich frei drehbar, weist also keine Drehwegbegrenzung zu diesen Baugruppen auf.

Durch das Bereitstellen des beispielsweise aus Kunststoffmaterial aufgebauten, ringartigen Zwischenabstützelements 117 kann bei der die beiden Gruppen 109, 111 von Dämpferelementen 46 umfassenden Dämpferelementeneinheit 42 ein durch die Summe der Kompressionswege der einzelnen Dämpferelemente 46 der beiden Gruppen definierter größerer Relativdrehwinkel zwischen dem Eingangsbereich 26 und dem Ausgangsbereich 34 und damit ein größerer Wirkwinkelbereich der zweiten Dämpferstufe 22 gewährleistet werden.

In Fig. 4 ist zu erkennen, dass die die Dämpferelemente 46 in Umfangsrichtung abstützenden Vorsprünge 113, 115, ebenso wie das ringartige Zwischenabstützelement 117 in seiner Gesamtheit, in Axialrichtung die Dämpferelemente 46 der Dämpferelementeneinheit 42 im Wesentlichen vollständig überdecken, so dass eine vergleichsweise großflächige Abstützung an den Vorsprüngen 113, 115 ermöglicht ist.

Das den Ausgangsbereich 34 der zweiten Dämpferstufe 22 bereitstellende Scheibenelement 32 weist an seinem Innenumfang eine Verzahnung 112 mit nach radial innen greifenden Zähnen 114 auf. In Zuordnung dazu ist am Außenumfang der Nabe 14 axial beispielsweise unmittelbar angrenzend an den Radialvorsprung 72 eine Verzahnung 116 mit Zähnen 118 ausgebildet. Die Verzahnungen 112 und 116 stehen mit Umfangsbewegungsspiel in Eingriff, so dass ein erster Freiwinkel W₁ definiert ist, welcher eine Relativdrehbewegung zwischen der Nabe 14 und somit auch dem Ausgangsbereich 30 der ersten Dämpferstufe 20 und dem Scheibenelement 32 und somit dem Ausgangsbereich 34 der zweiten Dämpferstufe 22 ermöglicht.

Auch hier kann die Anordnung so sein, dass unabhängig von der Relativdrehrichtung zwischen dem Zentralscheibenelement 56 und der Kupplungsnabe 14, das gleiche Ausmaß einer Relativdrehbewegung ermöglicht ist, also eine symmetrische Ausgestaltung für den Zugzustand und den Schubzustand vorliegt, oder aber hinsichtlich des maximalen Relativdrehwinkels eine Differenzierung zwischen Zugzustand und Schubzustand vorgenommen wird, so dass beispielsweise im Schubzustand ein maximaler Relativdrehwinkel von 1 bis 4° möglich sein kann, während im Zugzustand ein maximaler Relativdrehwinkel 4 bis 8° ermöglicht sein kann.

Wichtig ist jedoch, dass der erste Freiwinkel W₁, also die ermöglichte Relativdrehung zwischen dem Ausgangsbereich 34 und der Kupplungsnabe 14, kleiner ist, als der zweite Freiwinkel W₂, also die zwischen dem Zentralscheibenelement 56 und der Kupplungsnabe 14 ermöglichte Relativdrehung. Dies hat zur Folge, dass im Wirkungsbereich der ersten Dämpferstufe 20 die Verzahnungen 86, 88 nicht in gegenseitige Anlage kommen, also eine Weiterdrehung des Zentralscheibenelements 56 bezüglich der Kupplungsnabe 14 nicht blockieren. Auch die Verzahnungen 112 und 116 sind zunächst bei sehr kleinen Auslenkungen noch nicht in Eingriff. Dies bedeutet, dass ausgehend von einer Neutral-Relativdrehlage im unbelasteten Zustand zunächst nur die erste Dämpferstufe 20 des ersten Dämpferbereichs 16 wirksam ist, da das Scheibenelement 32 der zweiten Dämpferstufe 22 mangels Blockiereingriffs der Verzahnungen 112, 116 sich noch zusammen mit dem Eingangsbereich 26 der zweiten Dämpferstufe 22 um die Drehachse A bewegen kann. Erst dann, wenn nach einem vorbestimmten Winkel auf die Verzanhungen 112, 116 in Blockiereingriff geraten, die Verzahnungen 86, 88 aber immer noch nicht in Blockiereingriff sind, ist das Scheibenelement 32 an einer weiteren Drehbewegung bezüglich der Kupplungsnabe 14 gehindert, so dass unter weitergehender Kompression der Dämpferelemente 44 der Dämpferelementeneinheit 40 und dann einsetzender Kompression der Dämpferelemente 46 der beiden Gruppen 109, 111 der Dämpferelementeneinheit 42 der erste Dämpferbereich 16 mit seinen beiden dann parallel wirkenden Dämpferstufen 20, 22 elastisch wirksam ist.

Dieser Bereich der elastischen Wirksamkeit des ersten Dämpferbereichs 16 dauert an, bis nach weitergehender Relativdrehung des Zentralscheibenelements 56 und des damit drehfesten Eingangsbereichs 26 der zweiten Dämpferstufe 22 und des damit integralen Eingangsbereichs 36 der ersten Dämpferstufe 20 auch die Verzahnungen 86, 88 in Blockiereingriff treten. Ab diesem Zustand findet weder in der ersten Dämpferstufe 20, noch in der zweiten Dämpferstufe 22 eine weitergehende Kompression der dort jeweils vorhandenen Dämpferelemente 44 bzw. 46 statt. Der Bereich der elastischen Wirksamkeit des ersten Dämpferbereichs 16 wird verlassen und bei noch größeren Drehmomenten kann nur noch der zweite Dämpferbereich 18 unter Kompression der Dämpferelemente 60 desselben elastisch wirksam sein.

Der Bereich der elastischen Wirksamkeit der Torsionsschwingungsdämpferanordnung 10 kann also grundsätzlich unterteilt werden in einen Bereich sehr geringer Drehmomente, in welchem im Wesentlichen nur die erste Dämpferstufe 20 des ersten Dämpferbereichs 16 wirksam ist. In einem Bereich etwas höherer Drehmomente, in welchem die beiden Dämpferstufen 20, 22 des ersten Dämpferbereichs 16 parallel wirksam sind, und in einen Bereich hoher Drehmomente, in welchem der erste Dämpferbereich 16 im Wesentlichen nicht mehr elastisch wirksam ist und nur noch der zweite Dämpferbereich 18 elastisch wirksam ist.

Bei dieser Anordnung ist es besonders vorteilhaft bzw. Platz sparend, dass die beiden Dämpferstufen 20, 22 des ersten Dämpferbereichs 16 axial im Wesentlichen nebeneinander liegend angeordnet sind, wobei die zweite Dämpferstufe 22 bzw. deren Dämpferelemente 46 sich radial etwas weiter außen befinden, als die Dämpferelemente 44 der ersten Dämpferstufe 20, wobei hier auch ein radialer Überlapp bestehen kann. Die zweite Dämpferstufe 22 ist axial im Wesentlichen neben dem zweiten Ausgangsbereich 54, also dem Zentralscheibenelement 56, positioniert.

Bei der vorangehend detailliert beschriebenen Torsionsschwingungsdämpferanordnung 10 ist zur Abfuhr von Schwingungsenergie bei Auftreten von Drehschwingungen bzw. Drehungleichförmigkeiten eine allgemein mit 120 bezeichnete Reibformation vorgesehen. Diese umfasst einen ersten Reibbereich 122, welcher eine Reibfläche 124 an der konischen Ausformung des Deckscheibenelements 50 und somit dem zweiten Eingangsbereich 48 und eine komplementäre Reibfläche 126 am Lagerring 68 umfasst. Um für eine definierte Reibung zwischen diesen beiden Reibflächen 124, 126 sorgen zu können, ist der Lagerring 68 bezüglich der Kupplungsnabe 14 drehfest gehalten. Hierzu weist der Lagerring 68 in Umfangsrichtung begrenzte Radialvorsprünge 128 auf, die zwischen die Zähne 118 eingreifen.

Der erste Reibbereich 122 ist also immer dann wirksam, wenn der zweite Eingangsbereich 48 sich bezüglich der Kupplungsnabe 14 und mithin des Ausgangsbereichs 30 der ersten Dämpferstufe 20 um die Drehachse A verdreht. Der erste Reibbereich 122 ist also grundsätzlich immer dann wirksam, wenn eine Relativdrehung in der ersten Dämpferstufe 20 des ersten Dämpferbereichs 16 auftritt, wenn eine Relativdrehung in der zweiten Dämpferstufe 22 des ersten Dämpferbereichs 16 auftritt und wenn eine Relativdrehung im zweiten Dämpferbereich 18 auftritt. Es existiert kein durch Totgang oder dergleichen ermöglichter Zustand, in welchem bei Relativdrehung irgendwelcher Komponenten irgendeiner Dämpferstufe oder irgendeines Dämpferbereichs keine Reibkraft generiert werden könnte.

Ein zweiter Reibbereich 132 der Reibformation 120 ist wirksam zwischen dem zweiten Eingangsbereich 48 und dem Eingangsbereich 26 der zweiten Dämpferstufe 20. Der zweite Reibbereich 132 umfasst eine Reibfläche 134 am Deckscheibenelement 50 und eine diese axial abstützende Reibfläche 136 am Eingangsbereich 26, insbesondere dem Käfigelement 98 desselben. Der zweite Reibbereich 132 ist grundsätzlich immer dann wirksam, wenn eine Relativdrehbewegung zwischen dem zweiten Eingangsbereich 48 und dem Eingangsbereich 26 der zweiten Dämpferstufe 22 auftritt. Eine derartige Relativdrehbewegung entsteht auf Grund der drehfesten Ankopplung des Eingangsbereichs 26 an den zweiten Ausgangsbereichs 54 immer dann, wenn eine Relativdrehung zwischen dem zweiten Eingangsbereich 48 und dem zweiten Ausgangsbereich 54 auftritt, mithin also der zweite Dämpferbereich 18 elastisch wirksam ist.

Ein dritter Reibbereich 138 der Reibformation 120 umfasst einerseits Reibflächen am Käfigelement 98 oder/und 100 und umfasst andererseits Reibflächen an einem beispielsweise mit dem Scheibenelement 32 sich drehenden Vorspannelement, beispielsweise Tellerfeder oder Wellfeder oder dergleichen, oder/und 150 am Scheibenelement 32. Durch die Wirkung des Vorspannelements ist das Scheibenelement 32 mit seiner Reibfläche gegen die Reibfläche 142 eines Käfigelements 98, 100 gepresst, wobei das beispielsweise mit dem Scheibenelement 32 sich gemeinsam bewegende Vorspannelement sich reibend am anderen Käfigelement abstützt. Der dritte Reibbereich 138 ist also immer dann wirksam, wenn eine Relativdrehbewegung zwischen dem Eingangsbereich 26 der zweiten Dämpferstufe 22 und mithin auch dem zweiten Ausgangsbereich 54 und dem Ausgangsbereich 34 der zweiten Dämpferstufe 22 auftritt. Dies ist dann der Fall, wenn bei noch aktiver erster Dämpferstufe 20 im Bereich der elastischen Wirksamkeit der zweiten Dämpferstufe 22 deren Eingangsbereich 26 sich in Umfangsrichtung bezüglich deren Ausgangsbereich 34 bewegt.

Ein vierter Reibbereich 150 der Reibformation 120 liegt grundsätzlich zwischen dem Eingangsbereich 26 der zweiten Dämpferstufe 22 oder/und dem Ausgangsbereich 34 derselben und dem ringartigen Zwischenabstützelement 117. Beispielsweise kann dieses unter axialer Einspannung zwischen den beiden Käfigelementen 98, 100 gehalten sein, so dass eine Reibfläche 152 des Zwischenabstützelements und eine Reibfläche 154 des Käfigelements 100 reibend aneinander anliegen. Ein in den Figuren nicht dargestelltes Vorspannelement, das beispielsweise mit dem Zwischenabstützelement 117 drehfest gekoppelt sein kann, kann sich an einer Reibfläche des anderen Käfigelements 98 axial abstützen und mit diesem eine weitere Reibflächenpaarung bereitstellen.

Aus den vorangehenden Darlegungen ist zu erkennen, dass für den gesamten elastischen Wirkungsbereich der Torsionsschwingungsdämpferanordnung 10 das Entstehen einer Reibwirkung sichergestellt ist, wobei für unterschiedliche Lastzustände unterschiedliche bzw. zum Teil zusätzliche Reibbereiche wirksam sein können. Somit ist dafür gesorgt, dass unabhängig davon, in welchem Lastzustand die Torsionsschwingungsdämpferanordnung 10 bzw. eine damit ausgestattete Kupplungsscheibe betrieben wird, die durch Drehungleichförmigkeiten bzw. Drehschwingungen eingeleitete Energie zumindest teilweise durch die in der Reibformation 120 generierte Reibarbeit dissipiert werden kann. Es ist kein Zustand vorhanden, in welchem durch Totgang oder Drehbewegungsspiel keine Reibarbeit bei Relativdrehbewegung zweier Komponenten zu leisten wäre.

Der mit Bezug auf die Fig. 1 bis 9 beschriebene Aufbau der Torsionsschwingungsdämpferanordnung 10 ist sehr kompakt, wozu auch beiträgt, dass die zweite Dämpferstufe 22 an einer axialen Seite bezüglich des zweiten Ausgangsbereichs 54, d.h. des Zentralscheibenelements 56, angeordnet ist, wobei weiterhin die beiden Dämpferstufen 20, 22 des ersten Dämpferbereichs zueinander radial gestaffelt und axial versetzt liegen, d.h., einander im Wesentlichen axial im Wesentlichen nicht überlappen. Zu dem einfachen und kompakten Aufbau trägt auch bei, dass die Dämpferelemente 44 der ersten Dämpferstufe 20 teilweise in die Kupplungsnabe 14 auch das Zentralscheibenelement 56 integriert sind und diese die Dämpferelemente 44 im Wesentlichen direkt ansteuern, d.h. in Umfangsrichtung abstützen. Ferner übernimmt die Kupplungsnabe 14 sowohl in Zusammenwirkung mit dem Scheibenelement 32, als auch in Zusammenwirkung mit dem Zentralscheibenelement 56 die Funktionalität der Drehwegbegrenzung, was den einfachen Aufbau unterstützt. Da weiterhin die Kupplungsnabe 14 mit dem Lagerring 68 drehfest gekoppelt ist, wird bei den Reibflächen 124, 126 eine definierte Reibwechselwirkung erzielt. Dazu trägt auch die durch Einsatz des Vorspannelements 70 generierte Vorspannwirkung bei. Es sei hier darauf hingewiesen, dass in den Anlagebereich zwischen dem Deckscheibenelement 50 und dem Lagerring 68 beispielsweise ein konusartig geformter Federring gelegt sein kann, welcher bezüglich einer dieser Komponenten dann drehfest gehalten sein kann und insofern auch die Funktionalität einer Reibfläche übernimmt. Ein derartiger Federring ist beispielsweise aus der DE 196 52 104 C1 bekannt, deren diesbezügliche Offenbarung hiermit ausdrücklich in Bezug genommen wird. Damit wird eine Elastizität in den Anlagekontakt zwischen dem zweiten Eingangsbereich 48 und dem Lagerring 68 integriert, welche insbesondere auch den Ausgleich von Taumelbewegungen gestattet.

Auch in das Scheibenelement 32 sind verschiedene Funktionalitäten integriert. Einerseits dient es der Wechselwirkung mit den Dämpferelementen 46 der zweiten Dämpferstufe 22. Ferner ist das Scheibenelement 32 im dritten Reibbereich 138 reibend wirksam und erzeugt insbesondere dann eine Reibwirkung, wenn die zweite Dämpferstufe 22 des ersten Dämpferbereichs 16 elastisch wirksam ist. Das Scheibenelement 32 ist vorzugsweise aus Kunststoffmaterial aufgebaut und kann so eine vergleichsweise geringe Masse bei engen Fertigungstoleranzen aufweisen. Da die Aussparungen 90 zur Aufnahme der Dämpferelemente 46 der zweiten Dämpferstufe 22 nach radial außen offen sind, hier also nicht durch zusätzliche Materialabschnitte überdeckt sind, kann ferner eine radial kompakte Bauweise gewährleistet werden.

Die zum Aufbau des Eingangsbereichs 26 der zweiten Dämpferstufe 22 eingesetzten Käfigelemente 98, 100 sind vorzugsweise aus Kunststoffmaterial hergestellt und durch den vermittels der Axialvorsprünge generierten Formschluss in einfacher Weise zur gemeinsamen Drehung gekoppelt. In entsprechend einfacher Weise kann durch die Axialvorsprünge 102 eine definierte und einfache Formschlusskopplung zum Zentralscheibenelement 56 hergestellt werden. In den in den Käfigelementen 98, 100 gebildeten Aussparungen 108, 110 können die Dämpferelemente 56 der zweiten Dämpferstufe 22 aufgenommen und insbesondere auch nach radial außen hin abgestützt werden. Auch können die Dämpferelemente 46 an einer oder beiden axialen Seiten übergriffen werden, wodurch auch eine axiale Ausweichbewegung vermieden ist. In ihrem die Dämpferelemente 46 aufnehmenden Bereich sind die beiden Käfigelemente 98, 100 in Abstand zueinander positioniert, so dass der nach radial außen greifende Bereich des Scheibenelements 32 dort aufgenommen werden kann.

Die Dämpferelemente 46 können in den Aussparungen 108, 110 unter Vorspannung aufgenommen werden, so dass eine Mindestkraft bzw. ein Mindestmoment erforderlich ist, um die zweite Dämpferstufe 22 in ihrem elastisch wirksamen Bereich betreiben zu können. Auch die Käfigelemente 98, 100 sind durch Wechselwirkung mit dem Deckscheibenelement 50 einerseits und dem Scheibenelement 32 bzw. dem Vorspannelement 148 andererseits als Reibpartner in der Reibformation 120 wirksam. Da weiterhin die Dämpferelemente 46 der zweiten Dämpferstufe 22 an den beiden Käfigelementen 98, 100 axial beidseits ihrer Abstützung bezüglich des Scheibenelements 32 abgestützt sind, wird es möglich, in jeder Relativdrehrichtung die Dämpferelemente 46 symmetrisch zu belasten, so dass eine Ausweichbewegung insbesondere in axialer Richtung vermieden wird.

An dem vorangehend beschriebenen Aufbau können selbstverständlich verschiedene Änderungen vorgenommen werden. Der Lagerring 68 könnte in Reibschlusskopplung mit der Kupplungsnabe 14 eingesetzt sein, so dass abhängig von den Flächenbelastungen eine zusätzliche oder alternative Reibstelle auch zwischen dem Lagerring 68 und dessen axialer Abstützung an der Kupplungsnabe 14 entstehen kann. Das Scheibenelement 32 kann insbesondere dann, wenn es einer stärkeren Reibbelastung unterworfen sein soll, auch aus Metallmaterial aufgebaut sein. Vorteilhafterweise kann hier gesintertes Material eingesetzt werden.

Um in den einzelnen oder zumindest einer der Dämpferstufen 20, 22 eine weitere Abstufung der Wirkungsweise zu erlangen, können die Aussparungen zur Aufnahme der Dämpferelemente 44 oder/und die Aussparungen zur Aufnahme der Dämpferelemente 46 in den jeweiligen Dämpferstufen unterschiedlich gestaltet sein, so dass bei Relativverdrehung des jeweiligen Eingangsbereichs bezüglich des jeweiligen Ausgangsbereichs zunächst nur eines oder ein Teil der Dämpferelemente 44 oder/und 46 wirksam wird und nach vorgegebenem Drehweg dann weitere Dämpferelemente oder ein weiteres Dämpferelement 44 oder/und 46 wirksam wird. Insbesondere könnte ein Drehbewegungsanschlag zwischen dem ringartigen Zwischenabstützelement 117 und dem Eingangsbereich 26 oder dem Ausgangsbereich 34 der zweiten Dämpferstufe 22 gebildet sein. Dies hätte zur Folge, dass bei Erreichen eines bestimmten Relativdrehwinkels zwischen dem Eingangsbereich 26 und dem Ausgangsbereich 34 das Zwischenabstützelement 117 jeweils eines der Dämpferelemente 46 der beiden Gruppen 109, 111 überbrückt und nur noch das andere Dämpferelement 46 und die zweite Dämpferstufe 22 somit mit höherer Steifigkeit wirksam ist. Ferner könnten für unterschiedliche Gruppen auch voneinander unabhängig drehbare ringartige oder andersartig gestaltete Zwischenabstützelemente vorgesehen sein, so dass die verschiedenen Gruppen einer Dämpferstufe, hier der zweiten Dämpferstufe 22, auch zueinander unterschiedlich gestaltet sein können. Ferner ist es selbstverständlich möglich, dass die oder einige der Gruppen mehr als zwei in Umfangsrichtung aufeinander folgende und seriell wirksame Dämpferelemente 46 aufweisen, wobei dann für jeden Angrenzungsbereich zweier Dämpferelemente einer Gruppe voneinander unabhängig bewegbare Zwischenabstützelemente, beispielsweise mit ringartiger Gestaltung, vorgesehen sein müssen. Durch die Ausgestaltung der Reibwechselwirkung zwischen dem ringartigen Zwischenabstützelement 117 und beispielsweise dem Eingangsbereich 26 der zweiten Dämpferstufe wird es weiterhin möglich, einen gestuften Betrieb zu erhalten, nämlich dann, wenn die in dieser Dämpferstufe vorhandene Federkraft die Haftreibkraft übersteigt.

Um abhängig vom Relativdrehwinkel oder Relativdrehweg die Reibwirkung verändern zu können, können die reibend miteinander in Wechselwirkung tretenden Reibflächen zumindest teilweise rampenartig ausgebildet sein, so dass mit zunehmender Relativdrehung eine erhöhte Flächenpressung entsteht. Auch dort, wo ein Vorspannelement sich abstützt, kann durch eine derartige rampenartige Ausgestaltung eine mit dem Relativdrehwinkel zunehmende Anpresskraft und dementsprechend auch ein erhöhtes Reibmoment erzeugt werden.

Auch bei dem Eingangsbereich 26 der zweiten Federstufe 22, also den beiden Käfigelementen 98, 100, sind verschiedene Variationen möglich. So kann eines davon oder können beide aus Metallmaterial hergestellt sein. Auch hier kann die Umfangslänge der jeweils zusammen einen Aufnahmeraum für die Dämpferelemente 46 bildenden Aussparungen 108, 110 variieren, um Dämpferelemente unterschiedlicher Länge aufnehmen zu können bzw. eine verzögerte Wirksamkeit erreichen zu können. Ein Vorspannelement, welches die Erzeugung einer Reibwirkung für die zweite Dämpferstufe 22 gewährleistet, kann sich an einem der Käfigelemente abstützen. Auch ein Vorspannelement, welches die Erzeugung einer Vorspannkraft für die erste Dämpferstufe 20 gewährleistet, kann sich an einem der Käfigelemente abstützen, ebenso wie ein für eine versetzte Reibwirkung sorgendes Vorspannelement.

Um weiter dafür sorgen zu können, dass der Eingangsbereich 26 und das Zentralscheibenelement 56 in einer definierten Relativdrehposition bezüglich einander drehfest gehaltert werden können, können die Axialvorsprünge 102 des Käfigelements 100 zueinander unterschiedlich ausgebildet sein, wobei dann in dem Zentralscheibenelement 56 entsprechend unterschiedlich gestaltete Aufnahmeaussparungen eine definierte Relativpositionierung in nur einer oder einer Mehrzahl von gewünschten Einbaulagen gewährleisten. Ferner kann selbstverständlich das Käfigelement 100 zusätzlich zu den Axialvorsprüngen 102 auch diejenigen Axialvorsprünge aufweisen, die zur drehfesten Verbindung mit dem anderen Käfigelement 98 dienen. Sofern die Käfigelemente nicht aus Metallmaterial hergestellt sind, ist es vorteilhaft, das Käfigelement 100, also das mit dem Zentralscheibenelement 56 zusammenwirkende Käfigelement, aus thermoplastischem Material mit hoher Festigkeit auszuführen. Das Käfigelement 98 kann gleichermaßen aus thermoplastischem Material oder duroplastischem Material mit hoher Temperaturbeständigkeit ausgeführt sein. Grundsätzlich ist es weiterhin möglich, die beiden Käfigelemente 98, 100, also den Eingangsbereich 26 der zweiten Dämpferstufe 22, nicht durch die Axialvorsprünge 102, sondern unter Zwischeneingliederung einer weiteren Dämpferstufe an das Zentralscheibenelement 56, also den zweiten Ausgangsbereich 54, anzubinden. Hierzu könnten im radial inneren Bereich des Zentralscheibenelements 56 und in zumindest einem der Käfigelemente Aussparungen mit Umfangsabstützbereichen für Dämpferelemente, also beispielsweise Dämpferfedern, einer derartigen dritten Stufe vorgesehen sein.

Das Zentralscheibenelement 56 kann in seiner Wechselwirkung mit der Kupplungsnabe 14 so gestaltet sein, dass der im Bereich der Verzahnungen 112, 116 bestehende zweite Freiwinkel W₂ vergleichsweise klein ist, also nur geringfügig größer als der erste Freiwinkel W₁, welcher durch die Wechselwirkung des Scheibenelements 32 mit der Kupplungsnabe 14 vorgesehen ist. Auf diese Art und Weise kann gewährleistet werden, dass bereits bei vergleichsweise geringen Drehmomenten auch die zweite Dämpferstufe 22 nicht mehr elastisch wirksam sein kann, um insbesondere im Lastwechselzustand auftretende Schwingungen durch die Dämpferelemente 60 des zweiten Dämpferbereichs 18 auffangen zu können.

In den beiden Dämpferstufen 20, 22 des ersten Dämpferbereichs 16 können auch über einen größeren Winkelbereich ausgedehnte Dämpferelemente 44 bzw. 46, also beispielsweise Schraubenfedern, eingesetzt werden, die beispielsweise eine Umfangserstreckung von über 60° aufweisen können. Somit ist es auch möglich, in diesen Dämpferstufen größere Relativverdrehwinkel zu gewährleisten. Wie bereits ausgeführt, können die Dämpferelemente selbstverständlich auch aus beispielsweise blockartig gestaltetem Kunststoffmaterial aufgebaut sein. Die Anzahl der Dämpferelemente 44 der ersten Dämpferstufe 20 kann beispielsweise 2, 3 oder 4 sein. Die Anzahl der Dämpferelemente 46 der zweiten Dämpferstufe 22 ist vorteilhafterweise ein ganzzahliges vielfaches der Anzahl an Dämpferelementen 44 der ersten Dämpferstufe 20. Entsprechendes gilt auch für die Anzahl der Dämpferelemente 60 des zweiten Dämpferbereichs 18.

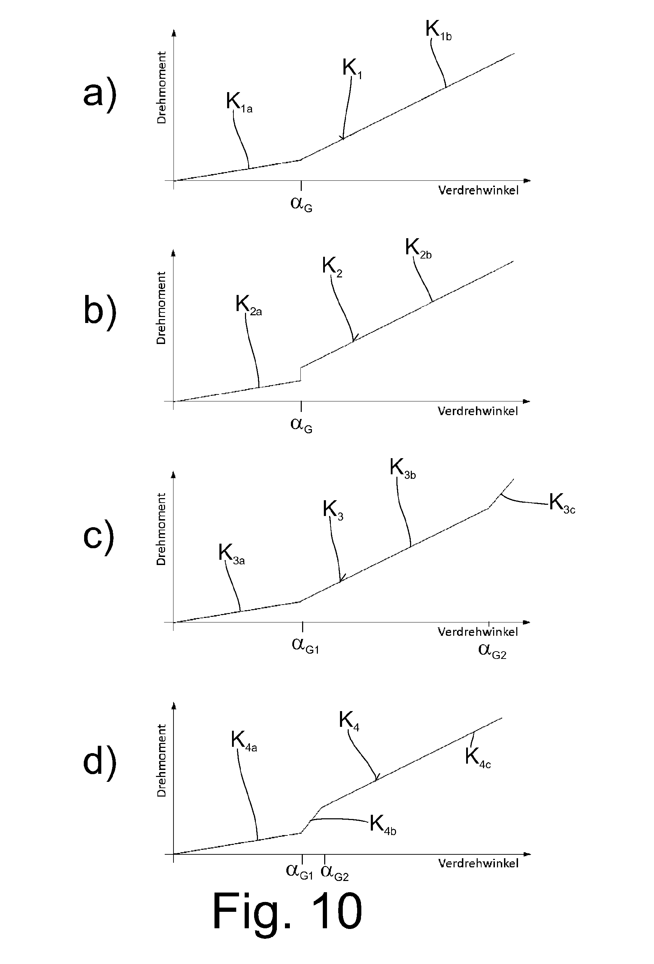

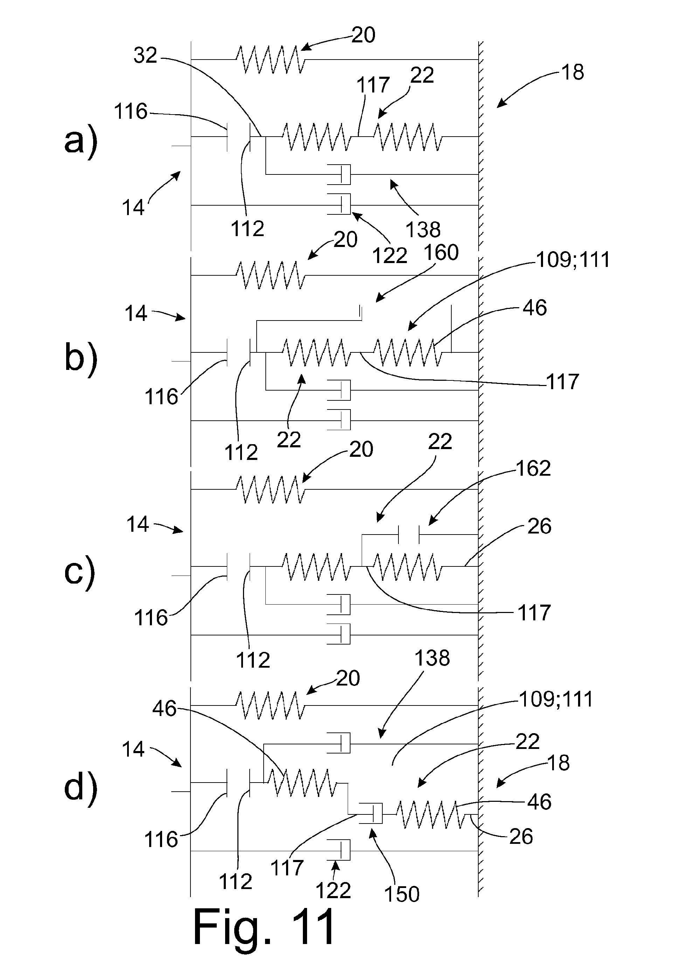

Die Fig. 10 und 11 zeigen in ihren einander zugeordneten Darstellungen a) bis d) jeweils den Verlauf einer Dämpferkennlinie bzw. Drehwinkel-Drehmomenten-Kennlinie im elastischen Wirkungsbereich des ersten Dämpferbereichs 16. Die Fig. 10a) zeigt den Verlauf der Kennlinie K₁ für den in Fig. 11a) prinzipiell dargestellten Aufbau mit den bereichsweise, nämlich ab Erreichen des Grenzwinkels α_{G} parallel wirkenden Dämpferstufen 20, 22. Unter dem Grenzwinkel α_{G} führt die alleinige Wirksamkeit der ersten Dämpferstufe 20 zu dem vergleichsweise flach ansteigenden Kennlinienabschnitt K₁ₐ und somit einer vergleichsweise weichen Kennung. Bei Erreichen des Grenzwinkels α_{G} kommen die Verzahnungen 112, 116 in Drehwegbegrenzungsanschlag, so dass über dem Grenzwinkel α_{G} die beiden Dämpferstufen 20, 22 zusammenwirken und somit zu einem steileren Kennlinienabschnitts K_{1b}, mithin also einer steiferen Kennung führen. Sowohl im Wirkungsbereich des Kennlinienabschnitts K1ₐ, als auch im Wirkungsbereich des Kennlinienabschnitts K1_{b} ist permanent eine Reibwirkung vorhanden, beispielsweise durch die beiden Reibbereiche 122 und 138.

Die Fig. 10b) zeigt bei Erreichen des Grenzwinkels α_{G} einen stufenartigen Anstieg in der Kennlinie K₂ zwischen den beiden Kennlinienabschnitten K₂ₐ und K_{2b}. Dies wird erreicht durch den in Fig. 11b) bei 160 symbolisierten vorgespannten Einbau der Dämpferelemente 46 der beiden Gruppen 109, 111. Erst dann, wenn die durch den vorgespannten Einbau definierte Mindestkraft bzw. das entsprechende Mindestdrehmoment erreicht bzw. überschritten ist, wird auch die zweite Dämpferstufe 22 parallel zur ersten Dämpferstufe 20 wirksam, so dass beide Dämpferstufen 20, 22 dann mit der im Kennlinienabschnitt K_{2b} erkennbaren höheren Steifigkeit parallel wirksam sind.

Die Fig. 10c) zeigt eine Kennlinie K₃ mit drei Kennlinienabschnitten K₃ₐ, K_{3b} und K_{3c}. Bei Erreichen eines des ersten Grenzwinkels α_{G1} wird bei hier im Wesentlichen nicht vorgespanntem Einbau der Dämpferelemente 46 der Dämpferelementeneinheit 42 zusätzlich zur ersten Dämpferstufe 20 auf die zweite Dämpferstufe 22 wirksam, so dass sich dann ein etwas steilerer Kennlinienabschnitt K_{3b} ergibt. Bei Erreichen eines zweiten Grenzwinkel α_{G2} wird ein in Fig. 11c) bei 162 veranschaulichter Anschlag zwischen dem ringartigen Zwischenabstützelement 117 und dem Eingangsbereich 26 der zweiten Dämpferstufe 22 wirksam. Es kann dann nur noch eines der beiden Dämpferelemente 46 einer jeweiligen Gruppe 109, 111 elastisch wirksam sein, wodurch sich ein Übergang zu einer höheren Steifigkeit ergibt.

Die Fig. 10d) veranschaulicht einen Kennlinienverlauf K₄, bei welchem bei Erreichen eines ersten Grenzwinkels α_{G1} von einer zunächst weicheren Kennung, also einem flacheren Kennlinienabschnitt K₄ₐ, zu einem vergleichsweise steilen Kennlinienabschnitt K_{4b} übergegangen wird. Wird ein zweiter Grenzwinkel α_{G2} erreicht, geht die Kennlinie K₄ in einen wieder etwas flacheren Kennlinienabschnitt K_{4c} über, dessen Steigung zwischen derjenigen der Kennlinienabschnitte K₄ₐ und K_{4b} liegt.

Erreicht wird eine derartige Steifigkeitscharakteristik des ersten Dämpferbereichs 16 mit dem in Fig. 11d) prinzipiell dargestellten Aufbau. Man erkennt den zwischen dem Zwischenabstützelement 117 und in diesem Beispiel dem Eingangsbereich 26 der zweiten Dämpferstufe 22 wirksamen vierten Reibbereich 150. So lange die bei Wirksamwerden der Verzahnungen 112, 116, also nach Erreichen des ersten Grenzwinkels α_{G1}, anliegende Kraft das Reibmoment im vierten Reibbereich 150 nicht übersteigt, wird nur das in Fig. 11d) zwischen der Verzahnung 112 und dem Zwischenabstützelement 117 wirksame Dämpferelement 46 einer jeweiligen Gruppe 109, 111 wirksam. Das zwischen dem Zwischenabstützelement 117 und dem Eingangsbereich 26 positionierte Dämpferelement 46 ist noch überbrückt. Steigt das Drehmoment bzw. die Belastung der zweiten Dämpferstufe 22 an, so wird bei Erreichen des zweiten Grenzwinkels α_{G2} die in dem Reibbereich 150 zunächst vorhandene Haftreibwirkung überwunden und das Zwischenabstützelement 117 geht in einen Gleitreibungszustand über, so dass nunmehr auch das zwischen diesem und dem Eingangsbereich 26 wirksame Dämpferelement 46 komprimiert werden kann. Die beiden seriell wirksamen Dämpferelemente 46 einer jeweiligen Gruppe 109, 111 weisen zusammen eine geringere Steifigkeit auf, als nur ein einzelnes davon, so dass im dritten Kennlinienabschnitt K_{4c} wieder eine etwas weichere Kennung erreicht wird, als im zweiten Kennlinienabschnitt K_{4b}. Während also im Ausgestaltungsbeispiel der Fig. 10c) und 11c) ein grundsätzlich progressiv ansteigender Kennlinienverlauf der Kennlinie K₃ vorhanden ist, ist im Ausgestaltungsbeispiel der Fig. 10d) und 11d) ein zumindest bereichsweise degressiv ansteigender Kennlinienverlauf der Kennlinie K₄ vorhanden.

Es ist abschließend darauf hinzuweisen, dass die Prinzipien der vorliegenden Erfindung selbstverständlich auch dann Anwendung finden, wenn der erste Dämpferbereich mit mehr als zwei Dämpferstufen aufgebaut ist. Auch dann ist es besonders vorteilhaft, dafür zu sorgen, dass immer dann, wenn irgendeine dieser Dämpferstufen im Bereich ihrer Elastizität arbeitet, dies durch die Erzeugung einer Reibkraft begleitet ist, also kein Totgang oder Relativdrehwinkel ohne Erzeugung einer Reibkraft vorhanden ist. Entsprechendes gilt selbstverständlich auch für den zweiten Dämpferbereich. Auch hier kann, wie insbesondere durch die Reibformation mit ihrem ersten Reibbereich realisiert, dafür gesorgt sein, dass immer dann, wenn der zweite Dämpferbereich im Bereich seiner Elastizität arbeitet, eine Reibarbeit zur Schwingungsenergieabfuhr geleistet werden muss.

## Patentansprüche

1. Torsionsschwingungsdämpferanordnung, insbesondere in einer Kupplungsscheibe, umfassend:
- einen in einem Bereich niedrigerer zu übertragender Drehmomente elastisch wirksamen ersten Dämpferbereich (16) mit einem ersten Eingangsbereich (24) und einem gegen die Wirkung einer ersten Dämpferelementenanordnung (38) um eine Drehachse (A) bezüglich des ersten Eingangsbereichs (24) drehbaren ersten Ausgangsbereich (28),
- einen im Bereich höherer zu übertragender Drehmomente elastisch wirksamen zweiten Dämpferbereich (18) mit einem zweiten Eingangsbereich (48) und einem gegen die Wirkung einer zweiten Dämpferelementenanordnung (58) um die Drehachse (A) bezüglich des zweiten Eingangsbereichs (48) drehbaren zweiten Ausgangsbereich (54),
- wobei der erste Dämpferbereich (16) eine erste Dämpferstufe (20) und eine zweite Dämpferstufe (22) umfasst, wobei die erste Dämpferstufe (20) bis zu niedrigeren Drehmomenten elastisch wirksam ist, als die zweite Dämpferstufe (22),
- wobei die erste Dämpferstufe (20) einen Eingangsbereich (36) und einen gegen die Wirkung einer ersten Dämpferelementeneinheit (40) der ersten Dämpferelementenanordnung (38) um die Drehachse (A) bezüglich ihres Eingangsbereichs (36) drehbaren Ausgangsbereich (30) umfasst,
- wobei die zweite Dämpferstufe (22) einen Eingangsbereich (26) und einen gegen die Wirkung einer zweiten Dämpferelementeneinheit (42) der ersten Dämpferelementenanordnung (38) um die Drehachse (A) bezüglich ihres Eingangsbereichs (26) drehbaren Ausgangsbereich (34) umfasst,
- eine Reibformation (120) zur Erzeugung einer Reibkraft wenigstens immer dann, wenn der Eingangsbereich (36) der ersten Dämpferstufe (20) sich bezüglich des Ausgangsbereichs (30) der ersten Dämpferstufe (20) um die Drehachse (A) dreht und wenn der Eingangsbereich (26) der zweiten Dämpferstufe (22) sich bezüglich des Ausgangsbereichs (34) der zweiten Dämpferstufe (22) um die Drehachse (A) dreht.

2. Torsionsschwingungsdämpferanordnung nach Anspruch1, **dadurch gekennzeichnet, dass** der Eingangsbereich (26) der zweiten Dämpferstufe (22) mit dem zweiten Ausgangsbereich (54) vorzugsweise im Wesentlichen ohne Drehbewegungsspiel gekoppelt ist.

3. Torsionsschwingungsdämpferanordnung nach Anspruch 1 oder 2, **dadurch gekennzeichnet, dass** der zweite Ausgangsbereich (54) mit dem Eingangsbereich (36) der ersten Dämpferstufe (20) vorzugsweise im Wesentlichen ohne Drehbewegungsspiel gekoppelt ist.

4. Torsionsschwingungsdämpferanordnung nach einem der Ansprüche 1 bis 3, **dadurch gekennzeichnet, dass** ein Scheibenelement (56) den zweiten Ausgangsbereich (54) und den Eingangsbereich (36) der ersten Dämpferstufe (20) bereitstellt.

5. Torsionsschwingungsdämpferanordnung nach einem der Ansprüche 1 bis 4, **dadurch gekennzeichnet, dass** der Ausgangsbereich (34) der zweiten Dämpferstufe (22) bezüglich des Ausgangsbereichs (30) der ersten Dämpferstufe (20) in einem ersten Freiwinkelbereich (W₁) um die Drehachse (A) drehbar ist, dass der zweite Ausgangsbereich (54) bezüglich des Ausgangsbereichs (30) der ersten Dämpferstufe (20) in einem zweiten Freiwinkelbereich (W₂) drehbar ist und dass der zweite Freiwinkelbereich (W₂) größer ist, als der erste Freiwinkelbereich (W₁).

6. Torsionsschwingungsdämpferanordnung nach einem der Ansprüche 1 bis 5, **dadurch gekennzeichnet, dass** der Eingangsbereich (36) der ersten Dämpferstufe Umfangsabstützbereiche (82, 84) für Dämpferelemente (44) der ersten Dämpferelementeneinheit (40) bereitstellt und dass der Ausgangsbereich (30) der ersten Dämpferstufe (20) Umfangsabstützbereiche (76, 78) für die Dämpferelemente (44) der ersten Dämpferelementeneinheit (40) bereitstellt, wobei die Umfangsabstützbereiche (82, 84) des Eingangsbereichs (36) der ersten Dämpferstufe (20) und die Umfangsabstützbereiche (76, 78) des Ausgangsbereichs (30) der ersten Dämpferstufe (20) zueinander radial gestaffelt liegen.

7. Torsionsschwingungsdämpferanordnung nach Anspruch 6, **dadurch gekennzeichnet, dass** die Dämpferelemente (44) der ersten Dämpferelementeneinheit (40) in ihrem radial äußeren Bereich an den Umfangsabstützbereichen (82, 84) des Eingangsbereichs (36) der ersten Dämpferstufe (20) abgestützt oder abstützbar sind und in ihrem radial inneren Bereich an den Umfangsabstützbereichen (76, 78) des Ausgangsbereichs (30) der ersten Dämpferstufe (20) abgestützt oder abstützbar sind.

8. Torsionsschwingungsdämpferanordnung nach einem der Ansprüche 1 bis 7, **dadurch gekennzeichnet, dass** der Eingangsbereich (26) der zweiten Dämpferstufe (22) Umfangsabstützbereiche (119, 121) für Dämpferelemente (46) der zweiten Dämpferelementeneinheit (42) bereitstellt und dass der Ausgangsbereich (34) der zweiten Dämpferstufe (22) Umfangsabstützbereiche (92, 94) für die Dämpferelemente (46) der zweiten Dämpferelementeneinheit (42) bereitstellt, wobei die Umfangsabstützbereiche (119, 121) des Eingangsbereichs (26) der zweiten Dämpferstufe (22) und die Umfangsabstützbereiche (92, 94) des Ausgangsbereichs (34) der zweiten Dämpferstufe (22) zueinander axial gestaffelt liegen.

9. Torsionsschwingungsdämpferanordnung nach Anspruch 8, **dadurch gekennzeichnet, dass** die Dämpferelemente (46) der zweiten Dämpferelementeneinheit (42) in ihrem axial mittleren Bereich an den Umfangsabstützbereichen (92, 94) des Eingangsbereichs (26) oder des Ausgangsbereichs (34) der zweiten Dämpferstufe (22), vorzugsweise des Ausgangsbereichs (34) der zweiten Dämpferstufe (22), abgestützt oder abstützbar sind und axial beidseits des axial mittleren Bereichs an den Umfangsabstützbereichen (119, 121) des Ausgangsbereichs (34) oder des Eingangsbereichs (26) der zweiten Dämpferstufe (22), vorzugsweise des Eingangsbereichs (26) der zweiten Dämpferstufe (22), abgestützt oder abstützbar sind.

10. Torsionsschwingungsdämpferanordnung nach einem der Ansprüche 1 bis 9, **dadurch gekennzeichnet, dass** die zweite Dämpferelementeneinheit (42) wenigstens eine Gruppe (109, 111) von Dämpferelementen (46) mit wenigstens zwei in Umfangsrichtung aufeinander folgenden und bezüglich einander an einem bezüglich des Eingangsbereichs (26) der zweiten Dämpferstufe (22) und des Ausgangsbereichs (34) der zweiten Dämpferstufe (22) um die Drehachse (D) bewegbaren Zwischenabstützelement (117) abgestützten Dämpferelementen (46) umfasst.

11. Torsionsschwingungsdämpferanordnung nach Anspruch 10, **dadurch gekennzeichnet, dass** wenigstens ein Zwischenabstützelement (117) ringartig ausgebildet ist.

12. Torsionsschwingungsdämpferanordnung nach Anspruch 10 oder 11, **dadurch gekennzeichnet, dass** die zweite Dämpferelementeneinheit (42) wenigstens zwei Gruppen (109, 111) von Dämpferelementen (46) mit wenigstens zwei in Umfangsrichtung aufeinander folgenden Dämpferelementen (46) umfasst, wobei wenigstens ein Zwischenabstützelement (117) Zwischenabstützbereiche (113, 115) für wenigstens zwei Gruppen (109, 111) von Dämpferelementen (46) bereitstellt.

13. Torsionsschwingungsdämpferanordnung nach einem der Ansprüche 1 bis 12, **dadurch gekennzeichnet, dass** die erste Dämpferstufe (20) radial innerhalb der zweiten Dämpferstufe (22) angeordnet ist oder/und dass die erste Dämpferstufe (20) und die zweite Dämpferstufe (22) zueinander axial versetzt angeordnet sind.

14. Torsionsschwingungsdämpferanordnung nach einem der Ansprüche 1 bis 13, **dadurch gekennzeichnet, dass** die erste Dämpferstufe (20) radial innerhalb des zweiten Ausgangsbereichs (54) angeordnet ist oder/und dass die zweite Dämpferstufe (22) an einer axialen Seite des zweiten Ausgangsbereichs (54) angeordnet ist.

15. Torsionsschwingungsdämpferanordnung nach einem der Ansprüche 1 bis 14, **dadurch gekennzeichnet, dass** der zweite Eingangsbereich (48) zwei in axialem Abstand zueinander angeordnete und miteinander fest verbundene Deckscheibenelemente (50, 52) umfasst und dass der zweite Ausgangsbereich (54) ein axial zwischen die Deckscheibenelemente (50, 52) eingreifendes Zentralscheibenelement (56) umfasst.

16. Torsionsschwingungsdämpferanordnung nach einem der Ansprüche 1 bis 15, **dadurch gekennzeichnet, dass** der Eingangsbereich (26) der zweiten Dämpferstufe (22) zwei axial nebeneinander liegende, miteinander wenigstens drehfest verbundene und Umfangsabstützbereiche (119, 121) für Dämpferelemente (46) der zweiten Dämpferelementeneinheit (42) bereitstellende Käfigelemente (98, 100) umfasst und dass der Ausgangsbereich (34) der zweiten Dämpferstufe (22) ein axial zwischen die Käfigelemente (98, 100) eingreifendes und Umfangsabstützbereiche (92, 94) für die Dämpferelemente (46) der zweiten Dämpferelementeneinheit (42) bereitstellendes Scheibenelement (32) umfasst.

17. Torsionsschwingungsdämpferanordnung nach einem der Ansprüche 1 bis 16, **dadurch gekennzeichnet, dass** der Ausgangsbereich (30) der ersten Dämpferstufe (20) eine Nabe (14) umfasst.

18. Torsionsschwingungsdämpferanordnung nach einem der Ansprüche 1 bis 17, **dadurch gekennzeichnet, dass** die erste Dämpferstufe (20) und die zweite Dämpferstufe (22) in nach oben durch das im Wesentlichen gleiche Maximaldrehmoment begrenzten Bereichen der zu übertragenden Drehmomente elastisch wirksam sind.

19. Torsionsschwingungsdämpferanordnung nach einem der Ansprüche 1 bis 18, **dadurch gekennzeichnet, dass** die Reibformation (120) einen zwischen dem zweiten Eingangsbereich (48) und dem Ausgangsbereich (30) der ersten Dämpferstufe (26) wirksamen ersten Reibbereich (122) mit wenigstens einer bezüglich des zweiten Eingangsbereichs (48) drehfesten Reibfläche (124) und wenigstens einer bezüglich des Ausgangsbereichs (30) der ersten Dämpferstufe (20) drehfesten Reibfläche (126) umfasst.

20. Torsionsschwingungsdämpferanordnung nach einem der Ansprüche 1 bis 19, **dadurch gekennzeichnet, dass** die Reibformation (120) einen zwischen dem zweiten Eingangsbereich (48) und dem Eingangsbereich (26) der zweiten Dämpferstufe (22) wirksamen zweiten Reibbereich (132) mit wenigstens einer bezüglich des zweiten Eingangsbereichs (48) drehfesten Reibfläche (134) und wenigstens einer bezüglich des Eingangsbereichs (26) der zweiten Dämpferstufe (22) drehfesten Reibfläche (136) umfasst.

21. Torsionsschwingungsdämpferanordnung nach einem der Ansprüche 1 bis 20, **dadurch gekennzeichnet, dass** die Reibformation einen zwischen dem Eingangsbereich (26) der zweiten Dämpferstufe (22) und dem Ausgangsbereich (34) der zweiten Dämpferstufe (22) wirksamen dritten Reibbereich (138) mit wenigstens einer bezüglich des Eingangsbereichs (26) der zweiten Dämpferstufe (22) drehfesten Reibfläche und wenigstens einer bezüglich des Ausgangsbereichs (34) der zweiten Dämpferstufe (22) drehfesten Reibfläche umfasst.

22. Torsionsschwingungsdämpferanordnung nach Anspruch 10 oder einem der Ansprüche 11 bis 21, sofern auf Anspruch 10 rückbezogen, **dadurch gekennzeichnet, dass** die Reibformation (120) einen zwischen dem Eingangsbereich (26) oder/und dem Ausgangsbereich (34) der zweiten Dämpferstufe (22) und wenigstens einem Zwischenabstützelement (117) wirksamen vierten Reibbereich (150) mit wenigstens einer bezüglich des Eingangsbereichs (26) oder/und des Ausgangsbereichs (34) der zweiten Dämpferstufe (26) drehfesten Reibfläche (152) und wenigstens einer bezüglich wenigstens eines Zwischenabstützelements (117) drehfesten Reibfläche (154) umfasst.

23. Kupplungsscheibe, umfassend eine Torsionsschwingungsdämpferanordnung (10) nach einem der vorangehenden Ansprüche.

24. Kupplungsscheibe nach Anspruch 23, **dadurch gekennzeichnet, dass** am zweiten Eingangsbereich (48) Kupplungsreibbeläge (12) vorgesehen sind und dass der Ausgangsbereich (30) der ersten Dämpferstufe (20) eine Kupplungsnabe (11) umfasst.
